# EUROPÄISCHE PATENTANMELDUNG

(11) **EP 3 361 680 A1**
(43) Veröffentlichungstag der Anmeldung: **15.08.2018**
(21) Anmeldenummer: 17401014.0
(22) Anmeldetag: 10.02.2017
(51) Int. Cl.: H04L 12/58

(54) **KOMMUNIKATIONSAUTOMATISIERUNGSANORDNUNG ZUR BILATERALEN TRANSMISSION VON NACHRICHTENDATEN SOWIE COMPUTERPROGRAMMPRODUKT UND VERFAHREN ZUM ABARBEITEN DER NACHRICHTENDATEN SOWIE VERWENDUNG**

(71) Anmelder: AT Estate AG, 45525 Hattingen (DE)
(72) Erfinder: Opitz, Matthias, 44787 Bochum (DE); Saxen, Markus, 45525 Hattingen (DE)
(74) Vertreter: Tanner, Lukas

(57) **Zusammenfassung**

In vielen Situationen erfordert die Anfrage von Informationen heute noch eine menschliche Interaktion mit dem Anfragenden. Wünschenswert ist eine zumindest teilweise Automatisierung bei der Bereitstellung von Informationen. Es wird eine Kommunikationsautomatisierungsanordnung (10) bereitgestellt, die eingerichtet ist zur automatisierten bilateralen Transmission von Nachrichtendaten (D1) zwischen wenigstens einem mobilen Endgerät (1.1) eines Absenders (A, A1) einerseits und dem Absender selbst oder wenigstens einem Empfänger (A2, An, 5, 5.1, 5.s) oder wenigstens einer Gruppe von Empfängern andererseits, wobei die Kommunikationsautomatisierungsanordnung eingerichtet ist zur zumindest teilweise automatisierten internen Abarbeitung der Nachrichtendaten; wobei erfmdungsgemäß vorgesehen ist, dass die Kommunikationsautomatisierungsanordnung eingerichtet ist zur bilateralen Transmission der Nachrichtendaten über eine Mehrzahl von Instant Messaging-APIs (3a.1, 3a.n), wobei die Kommunikationsautomatisierungsanordnung an einer eingangsseitigen Schnittstelle (11a) wenigstens einen Adapter (11.1) eingerichtet zum Strukturieren und wahlweise auch Formatieren eingehender Nachrichtendaten auf ein internes Datenstrukturformat aufweist. Hierdurch kann die Art und Weise der Kommunikation vereinfach und beschleunigt werden.

## Beschreibung

### TECHNISCHES GEBIET

Die vorliegende Erfindung betrifft eine Kommunikationsautomatisierungsanordnung bzw. -plattform für automatisierte Kommunikation zwischen einem Absender und einem oder mehreren Empfängern, insbesondere mit einer Vielzahl von Empfängern aus einer oder mehreren Empfänger-Gruppen, beispielsweise im Kontext einer Plattform für text-basierte Kundeninteraktion. Ferner betrifft die vorliegende Erfindung ein Computerprogrammprodukt eingerichtet zum Abarbeiten von Nachrichtendaten in einem zumindest teilweise automatisierten Kommunikationsprozess, insbesondere auch für von mobilen Endgeräten abgesendete Textnachrichten. Nicht zuletzt betrifft die vorliegende Erfindung auch ein Verfahren zum zumindest teilweise automatisierten Abarbeiten von Nachrichtendaten zwischen wenigstens einem mobilen Endgerät eines Absenders und wenigstens einem Empfänger, sowie die Verwendung eines entsprechenden Computerprogrammproduktes zum Steuern des Kommunikationsprozesses. Insbesondere betrifft die Erfindung eine Vorrichtung und ein Verfahren gemäß dem Oberbegriff des jeweiligen unabhängigen Anspruchs.

### HINTERGRUND

Die vorliegende Erfindung befasst sich mit einer möglichst effizienten, insbesondere text-basierten Interaktion zwischen Absendern und Empfängern möglichst in Echtzeit, insbesondere für Kundendienstaufgaben. Ziel ist dabei eine möglichst effiziente, von individuell genutzten Kommunikationsmedien möglichst unabhängige Kommunikation bzw. Gruppenkommunikation, insbesondere im Kontext einer Automatisierungsplattform für text-basierte Kundeninteraktion. Dabei ist eine Nutzung insbesondere im Kontext von Kunden-zu-Unternehmen-Kommunikation avisiert (business to consumer B2C).

Derzeit sind Unternehmen bezüglich Kundendienst für ihre Endkunden vorrangig per Telefon oder E-Mail zu erreichen. Telefonisch eingehende Kundenanfragen werden zunächst mit Hilfe einer automatisierten Menüführung oder einer Warteschlange entgegengenommen und letztendlich von Mitarbeitern bearbeitet.

Manche Unternehmen bieten auf ihren Internetseiten auch einen Chat-basierten Kundendienstkontakt an, was Kunden ermöglicht, über den Browser mit einem Kundendienstmitarbeiter oder einem automatisierten Chat Bot zu kommunizieren. Diese Art und Weise der Interaktion ist jedoch recht aufwändig für das Unternehmen, insbesondere dann, wenn die Betreuung tatsächlich durch einen Mitarbeiter (und nicht durch einen Computer/Roboter) erfolgen soll.

In Hinblick auf die private Kommunikation konnte in den letzten Jahren bereits eine signifikante Verlagerung weg von Telefongesprächen, E-Mails, SMS-Kurznachrichten und web-basierten Chats hin zu mobilen Diensten beobachtet werden, mittels welchen mehrere Empfänger adressiert werden können. Die aktuelle Situation ist aber zumindest insofern noch nicht zufriedenstellend, als die Einrichtung der gewünschten Kommunikationskanäle recht aufwändig ist, und als in vielen Fällen die Übersichtlichkeit nicht besonders gut ist. Es wird dann manchmal unklar, wer nun Empfänger sein wird, und ob eine bestimmte Nachricht bedenkenlos nun tatsächlich an all diese Empfänger geschickt werden soll. Auch ist es bisher nicht auf einfache Weise möglich, diese Art der Kommunikation systematisch zu automatisieren, insbesondere nicht hinsichtlich bestimmter Empfänger-Gruppen. Es besteht daher insbesondere für viele Unternehmen mit großen Personen-Datenbanken bzw. mit vielen Adressaten ein Bedarf an Mitteln für eine weniger aufwändige Kommunikation, insbesondere ohne die Personen dabei inhaltlich oder persönlich zu enttäuschen.

### ZUSAMMENFASSUNG

Aufgabe ist, eine Vorrichtung und ein Verfahren bereitzustellen, womit die Kommunikation zwischen wenigstens einem Absender und einem oder mehreren Empfängern, insbesondere mit einer Vielzahl von Empfängern aus einer oder mehreren Empfänger-Gruppen, auf möglichst effiziente Weise erfolgen kann, insbesondere in Echtzeit, insbesondere bei möglichst guter Transparenz. Auch eine Aufgabe ist, die Art und Weise der Kommunikation derart auszugestalten, dass dem jeweiligen Kommunizierenden dabei keine Umstellung oder keine krasse Änderung bisheriger kommunikativer Gewohnheiten zugemutet werden muss. Nicht zuletzt ist es eine Aufgabe, eine Kommunikationsplattform derart bereitzustellen, dass die Kommunikation zwar einerseits auf automatisierte Weise erfolgen kann, nichtsdestotrotz aber auch auf flexible Weise individualisierbar bleibt, beispielsweise für den Fall dass auf eine Standard-Anfrage des Absenders eine persönliche, spezifische Antwort gewünscht wird.

Zumindest eine dieser Aufgaben wird durch eine Kommunikationsautomatisierungsanordnung gemäß Anspruch 1 sowie durch ein Verfahren gemäß dem nebengeordneten Verfahrensanspruch gelöst, sowie durch die Gegenstände nebengeordneter Ansprüche. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine Kommunikationsautomatisierungsanordnung eingerichtet zur automatisierten bilateralen Transmission von Nachrichtendaten, insbesondere Textnachrichten, zwischen wenigstens einem mobilen Endgerät eines Absenders einerseits, eingangsseitig der Kommunikationsautomatisierungsanordnung, und dem Absender selbst oder wenigstens einem Empfänger oder wenigstens einer Gruppe von Empfängern andererseits, insbesondere wenigstens einem mobilen Endgerät eines Empfängers oder wenigstens einem Empfänger-Unternehmenskommunikationssystem aus einer Vielzahl von adressierbaren Unternehmenskommunikationssystemen, wobei die Kommunikationsautomatisierungsanordnung eingerichtet ist zur zumindest teilweise automatisierten internen Abarbeitung der Nachrichtendaten. Die Empfänger-Gruppe ist ausgangsseitig der Kommunikationsautomatisierungsanordnung angeordnet, also nicht an der eingangsseitigen Schnittstelle, an welcher die Nachrichtendaten vom Absender eingehen. Bei einer Antwortnachricht, die von einem der Empfänger der Gruppe emittiert wird, ändert sich die Kommunikationsrichtung. Die AntwortNachricht geht ausgangsseitig ein, und wird eingangsseitig wieder an den Absender bzw. dann Empfänger geschickt.

Erfindungsgemäß ist die Kommunikationsautomatisierungsanordnung eingerichtet zur bilateralen Transmission der Nachrichtendaten über eine Mehrzahl von Instant Messaging-APIs von vom jeweiligen mobilen Endgerät genutzten Instant Messaging (IM)-Anwendungen bzw. über einen entsprechenden IM-Dienst, wobei die Kommunikationsautomatisierungsanordnung an einer eingangsseitigen Schnittstelle zur jeweiligen Instant Messaging-API wenigstens einen an die Instant Messaging-API koppelbaren Adapter eingerichtet zum Strukturieren und wahlweise auch Formatieren eingehender Nachrichtendaten auf ein (einheitliches) internes Datenstrukturformat für die Abarbeitung in der Kommunikationsautomatisierungsanordnung aufweist. Dabei ist die Kommunikationsautomatisierungsanordnung eingerichtet zur zumindest teilweise automatisierten internen Abarbeitung der strukturierten/formatierten Nachrichtendaten im internen Datenstrukturformat, unabhängig vom Format oder von der Struktur der eingehenden Nachrichtendaten. Dies ermöglicht eine Instant Messenger-unabhängige Gruppenkommunikation über verschiedene IM-Dienste hinweg. Der oder die Adapter liefern die Flexibilität, Nachrichtendaten abzuarbeiten, die über einen mehr oder weniger beliebig wählbaren IM-Dienst übermittelt werden. Beispielsweise ist der wenigstens eine Adapter eingerichtet zum Transformieren von Nachrichtendaten von den meistgenutzten zehn IM-Anwendungen. Dabei kann der jeweilige IM-Dienst als "black box" betrachtet werden, als Service oder Infrastruktur der jeweiligen IM-Anwendung. Lediglich die IM-API als Schnittstellte zum IM-Dienst braucht genutzt zu werden. Der einzelne Absender muss für diese Art und Weise der Kommunikation nicht von seinen bisherigen Kommunikations-Gewohnheiten abweichen. Das Abarbeiten kann dabei die Auswahl der Empfänger-(Gruppen) umfassen.

Die Kommunikationsautomatisierungsanordnung (im Folgenden auch als KAA abgekürzt) kann auch als (Automatisierungs-)Architektur oder (Automatisierungs-)Plattform beschrieben werden, je nach relativer Anordnung und Verknüpfung der einzelnen Komponenten bzw. Module. Die KAA kann für Kommunikation in Echtzeit eingerichtet sein, also ohne spürbaren Zeitverzug, insbesondere binnen maximal zehn Sekunden, je nach Netzauslastung.

Der Empfänger kann dabei auch dem mobilen Endgerät des Absenders entsprechend, was erlaubt, die Kommunikation ausschließlich mittels der KAA durchzuführen, vollautomatisiert. Die KAA kann dabei auch dazu genutzt werden, die Kommunikation ausschließlich vollautomatisch zwischen dem Absender und seinem mobilen Endgerät zu vollziehen, insbesondere unter Einbindung eines Prozessmoduls und wenigstens einer Datenbank. Die KAA ist dann als eine Art Einbahnstraßen-Architektur oder Tenniswand zu verstehen: Die Nachrichtendaten gehen eingangsseitig ein und werden ausschließlich eingangsseitig wieder zurück zum Empfänger transmittiert. Die bilaterale Transmission erfolgt dann bilateral eingangsseitig.

Die Unabhängigkeit vom Format bzw. von der Struktur eingehender Nachrichtendaten liefert auch die Option, zwischen wenigstens einem Absender und einem oder mehreren Empfängern oder Empfänger-Gruppen auf sehr effiziente Weise zu kommunizieren, ohne dass die involvierten Personen sich die Mühe machen müssen, Kontaktdaten einzupflegen, und ohne dass Kontaktdaten preisgegeben werden. Dies ist ein immenser Vorteil im Vergleich zum Kommunizieren z.B. über E-Mail-Verteilerlisten. Kontaktdaten können beim jeweiligen externen Unternehmenssystem oder bei externen Datenbanken verbleiben, und das Abarbeiten der Daten intern in der KAA kann anonym erfolgen. Die KAA ist dann als eine Art Mittler zwischen dem Absender und den Empfängern zu verstehen: Nicht nur vom Absender gehen eingangsseitig Nachrichtendaten ein, die mittels der KAA ausgangsseitig zu Empfängern transmittiert werden, sondern auch ausgangsseitig können Nachrichtendaten eingehen, die mittels der KAA eingangsseitig zum Absender bzw. dessen mobilen Endgerät transmittiert werden. Hier liegen also sowohl eingangsseitig als auch ausgangsseitig Empfänger vor, mehr oder weniger zeitglich. Die Nachrichtendaten gehen eingangsseitig ein und werden ausschließlich eingangsseitig wieder zurück transmittiert. Die bilaterale Transmission erfolgt dann bilateral sowohl eingangsseitig als auch ausgangsseitig.

Ob ausschließlich eine eingangsseitige bilaterale Transmission und/oder auch eine ausgangsseitige bilaterale Transmission erfolgen soll, kann durch ein/das Prozessmodul der KAA vorgegeben werden. Dabei kann in einem Nachrichtenmodul der KAA identifiziert werden, ob es sich um eine Einzel- oder Gruppennachricht handelt. Bei einer Einzelnachricht kann insbesondere ein Prozessmodul eingebunden werden, bei einer Gruppennachricht kann insbesondere ein Gruppennachrichtenmodul eingebunden werden.

Die Interaktion der KAA mit der Instant Messaging-API (im Folgenden auch als IM-API abgekürzt) erfolgt bevorzugt jeweils spezifisch über einen auf eine jeweilige IM-API adaptierten bzw. konfigurierten Adapter. Mittels der KAA wird eine Kommunikation von Absendern/Empfängern über unterschiedliche IM-Dienste hinweg ermöglicht. Ein Absender kann nun mittels der KAA auch Empfänger adressieren, welche den gewählten IM-Dienst nicht nutzen. Dies kann insbesondere dadurch sichergestellt werden, dass in einer Datenbank der KAA geprüft wird, welche Kommunikationspartner/Empfänger zu einer bestimmten Gruppe von Empfängern gehören, um daraufhin deren Kontakteinformationen (insbesondere Telefonnummer und genutzten IM-Dienst) auszulesen und schließlich die empfangene Nachricht über einen oder mehrere Adapter an alle Empfänger der Gruppe (Gruppenmitglieder) zu transmittieren. Die ursprüngliche Nachricht kann dadurch vervielfacht und wahlweise auch modifiziert werden. Insbesondere kann die Modifizierung dahingehend erfolgen, dass der entsprechende Absendername dem Nachrichtentext voran gestellt wird, also ein erstes Datenpaket der Nachrichtendaten bildet.

Die vorliegende Erfindung ermöglicht, eine Reihe von weit verbreiteten mobilen IM-Diensten als Kommunikationskanal zu nutzen und ermöglicht eine wahlweise vollautomatische, teilautomatisierte oder zumindest teilweise manuelle Bearbeitung von über diesen Kanal empfangenen Nachrichten/Kundenanfragen anhand vordefinierter Prozesse. Dadurch wird auch die Kommunikation von Kunden untereinander unabhängig vom genutzten Instant Messaging-Dienst ermöglicht. Anders ausgedrückt: Es wird eine Plattform für eine Instant Messenger-unabhängige (Gruppen-)Kommunikation bereitgestellt, insbesondere in einer oder durch eine Instant Messaging-zu-Prozess-Automatisierungsplattform (IM2PAP). Der Begriff IM2PAP, der sich auf das im Detail beschriebene Ausführungsbeispiel bezieht, kann hier als eine der möglichen Varianten der hier beschriebenen KAA aufgefasst werden. Die KAA kann auch eine solche Plattform umfassen.

Die Erfindung ermöglicht, die auf den mobilen Endgeräten (z.B. Smartphone) von Kunden installierten Instant Messaging-Anwendungen als Eingangskanal für Kundenanfragen zu nutzen. Dabei können alle/beliebige IM-Anwendungen bzw. IM-Dienste mit offenen Programmierschnittstellen (APIs) als Eingangskanal als Vermittlungs-Instanz zwischen Absender und KAA genutzt werden. Eine in der entsprechenden IM-Anwendung eingegebene Kundenanfrage kann über den darunter liegenden IM-Dienst an die KAA bzw. Instant Messaging-zu-Prozess-Automatisierungsplattform (IM2PAP) übergeben werden. Im Folgenden bezeichnet "das Unternehmen" ein Unternehmen, das einen text-basierten Kundendienst über die KAA anbietet. Die Prozesse können dabei auch einen oder mehrere Geschäftsprozesse umfassen.

Insbesondere im Falle einer an das Unternehmen (und nicht an andere Kunden) adressierten Anfrage kann mittels der KAA automatisch anhand von vordefinierten Prozessen auf dem jeweiligen Kanal geantwortet werden, über welchen die Anfrage/Nachricht empfangen wurde. Einzelne (Kommunikations-)Prozesse können dabei über eine Web-Anwendung durch Mitarbeiter des Unternehmens konfiguriert oder betreut werden. Falls Anfragen nicht automatisch beantwortet werden können, können diese zur manuellen, individuellen Beantwortung über eine Web-Anwendung an einen Mitarbeiter des Unternehmens übergeben werden.

Benötigt die automatische Bearbeitung eines Prozesses Daten aus einem anderen Unternehmenssystem/Unternehmenskommunikationssystem oder sind empfangene Daten an eines dieser Systeme zu übergeben, so kann der Datenaustausch mit anderen Unternehmenssystemen über eine standardisierte Schnittstelle (API) erfolgen.

Im Falle von Kundenanfragen, die nicht das Unternehmen, sondern andere Kunden adressieren, kann die KAA eine Funktion als Mittler übernehmen und empfangene Nachrichten an bestimmte oder alle anderen Kunden weiterleiten, die derselben Kundengruppe wie der Absender zugeordnet sind. Dabei kann die KAA die Kontaktdaten des Absenders (wie die Telefonnummer oder die Instant Messaging-Dienst-ID) verbergen und z.B. lediglich den Namen bzw. Benutzernamen des Absenders offenbaren. Kontaktdaten der Kunden, Kundengruppen bzw. Zuordnung einzelner Kunden zu Gruppen, empfangene und versendete Nachrichten sowie Prozesse können in einer plattforminternen Datenbank gespeichert werden.

Jede IM-Anwendung bzw. jeder IM-Dienst kann ein individuelles Datenformat oder eine individuelle Datenstruktur zur Übermittlung von Nachrichtendaten nutzen. Als Formate können beispielhaft genannt werden: XML (Extensible Markup Language) oder JSON (JavaScript Object Notation). Als Strukturen können beispielhaft genannt werden: eine Struktur oder mehrere Unterstrukturen nur einer Ebene (ohne Hierarchie), Strukturen in wenigstens zwei Ebenen (insbesondere mit vordefinierter Hierarchie). Das Strukturieren und wahlweise auch Formatieren mittels des Adapters kann also allgemeine als Transformieren beschrieben werden. Je nachdem, in welcher Form die Daten durch den IM-Dienst geliefert werden, umfasst das Transformieren also ein Strukturieren oder auch ein Formatieren.

Dabei basiert das interne Datenstrukturformat bevorzugt auf einer Ebene, aber wenigstens drei Unterstrukturen jeweils mit Daten spezifischer Information. Werden die eingehenden Nachrichtendaten z.B. in einem anderen Ein- oder Zweiebenen-Format bereitgestellt, erfolgt eine Umstrukturierung auf das Ein-Ebenen-Format mit wenigstens drei Unterstrukturen. Ferner beruht das Datenstrukturformat bevorzugt auf dem JSON-Format. Werden die eingehenden Nachrichtendaten z.B. im XML-Format bereitgestellt, erfolgt bevorzugt auch eine Formatierung der Nachrichtendaten. Beide Schritte (Strukturieren und Formatieren) können vom jeweiligen Adapter durchgeführt werden. Die strukturierten/formatierten Nachrichtendaten können also z.B. im JSON-Format strukturiert in drei Unterstrukturen auf einer Ebene (ohne Hierarchie) vorliegen. Dieses Format bzw. diese Struktur liefert den Vorteil, dass wenig Speicherplatz benötigt wird und sie sich insbesondere aufgrund der "flachen" Struktur schnell auslesen lässt, was förderlich ist für Kommunikation in Echtzeit. Im Gegensatz dazu können XML-Dateien viel "Overhead" aufweisen.

Ein jeweiliger IM-Dienst übermittelt Nachrichtendaten in einer Dienst-spezifischen Struktur: Der eine IM-Dienst sendet die Nachrichtendaten in einer eher "flachen" Struktur, bei welcher auf derselben Unterstruktur beispielsweise sowohl der Nachrichteninhalt als auch die Absenderinformationen enthalten sind. Ein anderer IM-Dienst übermittelt Nachrichtendaten mit einer Struktur mit mehreren Unterebenen, insbesondere jeweils für Absenderinformationen und Nachrichteninhalte. Auch kann die Benennung der Attribute der Nachrichtendaten von IM-Dienst zu IM-Dienst variieren. Der/die Adapter der KAA sind eingerichtet, alle eingehenden Nachrichten(-daten) in eine einheitliche, innerhalb der KAA verwendete Datenstruktur umzuwandeln bzw. zu transformieren (zu formatieren bzw. zu strukturieren). Insbesondere wird dafür ein Datenstrukturformat bestehend aus oder zumindest umfassend die folgenden drei Unterstrukturen auf einer Ebene gewählt, wobei wahlweise weitere Unterstrukturen vorgesehen sein können:
1. (oberste) Unterstruktur: Kommunikationspartnerdaten, also Daten von Absender und Empfängern (insbesondere Name, Telefonnummer);
2. Unterstruktur: Nachrichteninhalt (Typ/Art der Nachrichtendaten, z.B. Text oder Dokument, sowie Inhalt der Nachricht); und
3. Unterstruktur (unterste): Meta-Informationen (insbesondere Zeitstempel, Eingangskanal, Sicherheitstoken).

Im Folgenden wird ein Beispiel für eine für die KAA vorteilhafte Datenstruktur auf einer Ebene mit drei Unterstrukturen bzw. Objekten gegeben:

```
 {
         "partner":
         { "messengerId":"123456789",
                  "firstName": "Max",
                  "lastName": "Mustermann",
                  "userName": "MaxMustermann"
         },
         "content":
         { "type": "TEXT",
                  "text": "Hallo",
                  "data": null,
         },
         "meta":
         { "messageId":4564854654321,
                  "channel":"Ilvl-Dienst",
                  "token": "f8t7hz8tfz4u54z5tu48ghjgh4j5gh4j8z75z4ui564uzi",
                  "timestamp":1485951821
         }
 }
```

Der wenigstens eine Adapter kann eingerichtet sein zum Strukturieren und wahlweise auch Formatieren einer Vielzahl unterschiedlicher Datenstrukturen von einer Vielzahl unterschiedlicher IM-Dienste. Wahlweise wird für jeden IM-Dienst bzw. für jede IM-API ein spezifischer Adapter bereitgestellt. Inwieweit ein jeweiliger Adapter nur eine Schnittstelle oder doch mehrere Schnittstellen zu mehreren unterschiedlichen IM-API bereitstellen soll, kann individuell je Anwendungsfall vorgegebenen bzw. programmiert werden. Ebenso kann die Schnittstelle zwischen KAA und IM-Dienst bzw. IM-Anbieter durch einen oder mehrere Adapter bereitgestellt werden. Bevorzugt wird die Schnittstelle durch mehrere Adapter bereitgestellt, welche jeweils individuell angepasst sind auf einen jeweiligen IM-Dienst. Sprich: Die Strukturierung/Formatierung kann im jeweiligen Adapter auf jeweils individuelle Weise erfolgen. Die Schnittstelle ist dann eine mehrkanalige Verteiler-Schnittstelle KAAseitig mit einheitlichem Datenstrukturformat-Kanal.

Es hat sich gezeigt, dass es insbesondere dann vorteilhaft ist, einem Adapter mehrere IM-APIs zuzuordnen, wenn die IM-APIs bzw. der Zugriff darauf sowie die übergebenen Datenstrukturformate ähnlich zueinander sind. Beispielsweise kann ein Adapter vorgesehen sein, der speziell einen ersten IM-Dienst und einen zweiten IM-Dienst bedient. Dieser Adapter kann eine ganze Reihe von Funktionen enthalten, die für beide APIs genutzt werden können, mit einer gewissen Anzahl spezifischer Funktionen je API. Für einen dritten IM-Dienst, der mit den ersten beiden IM-Diensten nicht vergleichbar ist oder technisch nicht auf einfache Weise zusammengefasst werden kann, kann beispielsweise ein separater Adapter vorgesehen sein, welcher insbesondere in einer anderen Programmiersprache geschrieben ist.

Die Nachrichtendaten können durch die jeweilige Instant Messanging-API bzw. durch den jeweiligen Instant Messanging-Dienst eingangs der KAA bereitgestellt sein. Die Instant Messanging-API kann für möglichst komfortable Benutzer-Interaktion als bereits vorhandene Benutzerschnittstelle genutzt werden. Die KAA kann demnach entkoppelt von auf dem jeweiligen mobilen Endgerät installierten Anwendungen bereitgestellt und genutzt werden, und ist damit nicht nur besonders benutzerfreundlich, sondern auch in einem hohen Grade unabhängig von der Art der zu verarbeitenden Nachrichten und flexibel hinsichtlich beliebiger Gruppen von Absendern und Empfängern nutzbar.

Der Absender liefert eingangsseitig eine Anfrage. Beim eingangsseitigen Abrufen/Empfangen der entsprechenden Nachrichtendaten kann den Meta-Informationen der Eingangskanal entnommen werden, und in der KAA gespeichert bzw. den Nachrichtendaten zugeordnet werden. Entsprechend kann bei Kommunikation in entgegengesetzter Richtung zurück zum Absender der richtige Antwortkanal gewählt werden. Die KAA kann ausgangsseitig eine Antwort an wenigstens einen Absender und wahlweise auch an weitere Empfänger liefern, und/oder die Anfrage ausgangsseitig zu einem Servicemitarbeiter oder einem weiteren Empfänger (auch eine Gruppe von Empfängern oder ein Kommunikationssystem) weiterleiten.

Als Empfänger kann eine einzelne Person bzw. ein einzelnes Endgerät oder auch ein Kommunikationssystem mit einer Vielzahl von darin vernetzten Empfängern verstanden werden, insbesondere auch ein Unternehmenssystem oder ein Unternehmenskommunikationssystem (unternehmensinternes Kommunikationssystem). Beispielhaft kann eine Schnittstelle zu einem ERP-System eines Unternehmens beinhaltend Kundendaten genannt werden. Ändert sich bei einem Kunden beispielsweise die Adresse, so kann der Kunde (Absender) dies über die KAA mitteilen. Die KAA kann diese Nachrichtendaten teil- oder vollautomatisiert an das ERP-System weiterleiten, in welchem der Kundendatensatz teil- oder vollautomatisiert aktualisiert werden kann.

Als API ist hier eine offene Programmierschnittstelle zu verstehen. Die IM-API kann als Eingangskanal umschrieben werden. Ebenso kann die IM-API die Schnittstelle zu einem durch den jeweiligen Adapter bereitgestellten Ausgangskanal der KAA bilden. Die IM-API kann also sowohl eingangsseitig als auch ausgangsseitig genutzt werden. Das Eingabemedium für den Absender kann dabei als APP oder Kommunikations-Anwendung des Instant Messaging-Dienstes beschrieben werden. Der Absender/Empfänger muss die API also nicht kontaktieren, sondern kann sich in seiner gewohnten Kommunikations-Anwendung bewegen.

Die Kopplung zwischen dem/den Adapter(n) der KAA und der jeweiligen IM-API bzw. dem IM-Dienst kann auf Push- und/oder Pull-Technik basieren. Die Art und Weise der Datenübergabe kann dabei von den jeweiligen IM-Diensten vorgegeben werden. Die KAA ist eingerichtet, den Vorgaben entsprechend zu reagieren und die Nachrichtendaten entsprechend dem vom IM-Dienst vorgegebenen Kommunikationsformat abzurufen bzw. zu übergeben, wobei die entsprechende Datenstruktur auf das KAA-interne Datenstrukturformat transformiert wird.

Eingangsseitig kann die Kopplung an der Schnittstelle zwischen KAA und IM-Dienst insbesondere wie folgt erfolgen: 1. Variante 1: Die KAA fragt beim jeweiligen Dienst regelmäßig neue Nachrichten ab und "zieht" diese vom Dienst ("pull"). 2. Variante: Der IM-Dienst leitet eine empfangene Nachricht unmittelbar an einen vorher definierten Adapter ("Webhook") der KAA weiter ("push").

Ausgangsseitig kann die Kopplung an der Schnittstelle zwischen KAA und IM-Dienst insbesondere wie folgt erfolgen: Die KAA nimmt Vorgaben für eine Methode zum Senden von Nachrichten/Nachrichtendaten beim jeweiligen IM-Dienst entgegen und übermittelt die Nachrichtendaten entsprechend den Vorgaben, insbesondere nach Rückwandlung.

Vorteile der KAA-Architektur ergeben sich insbesondere auch dadurch, dass bereits vorhandene Kommunikationsschnittstellen (insbesondere APPs, Anwendungen) seitens des Absenders genutzt werden können und dem Absender/Endnutzer (user) nicht zugemutet werden muss, noch weitere APPs oder Programme auf seinem Endgerät zu installieren. Dies erhöht die Benutzerfreundlichkeit. Der Endnutzer kann sich in der gewohnten Umgebung bewegen, und dennoch eine erweiterte Funktionalität nutzen.

Auch ist keine tiefergehende (technische) Interaktion mit den Instant Messaging-Diensten erforderlich. Vielmehr ist lediglich die Übergabe von Nachrichtendaten erforderlich, also ein ohnehin schon praktizierter Prozess. Die Verarbeitung der Daten kann vollständig innerhalb der KAA erfolgen.

Die KAA kann eine Vielzahl von Adaptern jeweils individuell eingerichtet zur Kommunikation mit wenigstens einer IM-API bereitstellen bzw. umfassen. Wahlweise können mehrere unterschiedliche IM-API mittels nur eines Adapters adressiert werden. Ein jeweiliger Adapter kann also mehrere APIs bedienen und kann dabei zu einem gewissen Teil API-übergreifende Funktionen und API-spezifische Funktionen umfassen.

Die KAA kann ferner eingerichtet sein zur Selektion automatisiert abarbeitbarer strukturierter/formatierter Nachrichtendaten aus den Nachrichtendaten und zur automatisierten Abarbeitung dieser selektierten Nachrichtendaten in einem zumindest teilweise automatisierten Kommunikationsprozess. Dies liefert die Möglichkeit, die Daten effizient zu verarbeiten. Es müssen nur jene Daten manuell abgearbeitet bzw. beantwortet werden, die nicht automatisiert abgearbeitet werden können.

Die KAA kann eingerichtet sein zum anonymen Bereitstellen der strukturierten/formatierten Nachrichtendaten, insbesondere ausschließlich basierend auf Namens-Angaben, ohne Kontaktdaten. Als Kontaktdaten können z.B. genannt werden: Telefonnummer, Instant Messenger-ID. Dadurch kann die Kommunikation unabhängig von bzw. unter Berücksichtigung von einemgewünschten oder gesetzlich vorgeschriebenen Anonymisierungsgrad erfolgen. Insbesondere werden die Telefonnummer bzw. IM-ID und die Nachrichteninhalte nur für die Dauer eines Prozesses gespeichert. Ist die Bearbeitung eines Prozesses abgeschlossen, können auf Wunsch alle damit verbundenen Daten (personenbezogenen Daten des Absenders) sowie Nachrichteninhalte anonymisiert werden. Die Anonymisierung kann beispielsweise durch das Überschreiben der Daten durch so genannte "Hash-Wert" erfolgen. Dieser Vorgang ist nicht bzw. nur mit nicht realisierbarem Rechenaufwand umzukehren.

Die KAA ist eingerichtet zur Transmission der Nachrichtendaten unabhängig von der Art der IM-API, insbesondere indem eine Vielzahl von Adaptern bereitgestellt sind/werden, welche jeweils für eine Transformation spezifisch von bzw. zu einer der IM-API eingerichtet sind.

Als bilaterale Transmission/Kommunikation ist dabei eine Transmission in beide Richtungen zu verstehen, also vom Absender und zum Absender, bzw. zum Empfänger und vom Empfänger. Die bilaterale Transmission kann jeweils an derselben Schnittstelle erfolgen, sei es eingangsseitig oder ausgangsseitig der KAA.

Ein beispielhafter Anwendungsfall ist das Bereitstellen von Informationsdaten für den Absender im Zusammenhang mit einer Immobilien- oder Automobil-Suche (Kauf oder Miete). Dem Betreiber der KAA wird ermöglicht, mit hoher Effizienz auf die einzelnen Fragen des Absenders einzugehen, insbesondere in Echtzeit. Es wird dann schnell klar, an welcher Stelle der Absender (Kunde) tatsächlich individuellen Beratungsbedarf hat, also an welcher Stelle ein Mitarbeiter bemüht werden muss, auf die Anfragen des Absenders einzugehen. Die Kommunikation wird nicht nur effizienter und weniger zeitraubend, sondern auch kostengünstiger, für alle Beteiligten. Dies wird im Folgenden kurz veranschaulicht, wobei das Bereitstellen der Informationsdaten nur wenige Augenblicke dauert (z.B. einige Sekunden, oder maximal 2 bis 3 Minuten), ohne dass seitens des Empfängers eine manuelle Interaktion erforderlich wird. Vorteilhaft ist dabei auch, dass der Absender jedenfalls in Echtzeit eine Reaktion auf seine Anfrage erhält.

### Beispiel: Anfrage eines Interessenten im Rahmen einer Immobiliensuche

Kunde bzw. manuelle Kundeneingabe: Objekt 123-45-M
KAA: Willkommen bei der Immobilien 123 GmbH! Ich bin Ihr virtueller Assistent. Ich freue mich, dass Sie sich für eines unserer Angebote interessieren. Es geht um das Objekt 'Musterstraße 1, 12345 Musterstadt'. Ist das richtig? [Ja/Nein]
Kunde: ja
KAA: Wie kann ich Ihnen bezüglich des Angebots weiterhelfen?
   [1] Möchten Sie Besichtigungstermin vereinbaren?
   [2] Kann ich Ihnen weitere Informationen zum Objekt bereitstellen?
Kunde: 2
KAA: Anbei sende ich Ihnen das Expose zum Objekt. [Dateianhang]
KAA: Möchten Sie direkt einen Besichtigungstermin vereinbaren?
Kunde: Nein
KAA: In Ordnung. Vielen Dank für Ihr Interesse! Ich hoffe, bald wieder von Ihnen zu hören.

Die Kommunikation kann dabei nicht nur bilateral zwischen Absender und KAA erfolgen, sondern auch bilateral zwischen Absender und einer Vielzahl von Empfängern einer Empfänger-Gruppe, beispielsweise alle Mieter einer größeren Wohneinheit (z.B. 16 Mietparteien). Der Absender kann z.B. eine Frage oder einen Vorschlag bezüglich einer einvernehmlichen Regelung zur Innenhofreinigung kommunizieren, und in Reaktion darauf von einzelnen Empfängern eine Antwort erhalten, wobei der Name der Empfänger der Antwortnachricht vorangestellt wird. So kann der Absender Informationen zuordnen, ohne dass ihm Kontaktdaten der anderen Mietparteien kommuniziert werden müssen.

Gemäß einem Ausführungsbeispiel umfasst die eingangsseitige Schnittstelle einen Webservice. Dies liefert für den Nutzer eine hohe Bedienerfreundlichkeit, und Unabhängigkeit, denn der Nutzer kann nach wie vor ausschließlich über seine genutzte IM-Anwendung kommunizieren. Der Webservice muss vom Nutzer nicht involviert werden, sondern kann mit dem IM-Dienst kommunizieren. Der Webservice kann spezifische bezüglich der jeweiligen Anwendung oder der Art der Kommunikation (insbesondere Art der IM-Anwendungen) ausgelegt oder erweitert werden.

Gemäß einem Ausführungsbeispiel ist die eingangsseitige Schnittstelle eine eingangsseitig mehrkanalige Verteiler-Schnittstelle mit einheitlichem Datenstrukturformat-Kanal seitens der Kommunikationsautomatisierungsanordnung. Dies liefert die Möglichkeit, die KAA für eine Vielzahl unterschiedlicher IM-Anwendungen gleichzeitig bereitzustellen, ohne die Architektur der KAA oder die Art der Kommunikationswege anpassen zu müssen.

Gemäß einem Ausführungsbeispiel ist der wenigstens eine Adapter eingerichtet zur bilateralen Transmission von und zur jeweiligen IM-API bzw. von und zu einem jeweiligen IM-Dienst. Dies ermöglicht denselben Datenfluss-Pfad, unabhängig von der Richtung der Kommunikation.

Gemäß einem Ausführungsbeispiel ist der wenigstens eine Adapter eingerichtet zum Zurücktransformieren (also Zurückstrukturieren und wahlweise auch Zurückformatieren) abgearbeiteter Nachrichtendaten und zum Bereitstellen der abgearbeiteten Nachrichtendaten an der oder über die jeweilige IM-API bzw. am jeweiligen IM-Dienst für den Absender insbesondere jeweils spezifisch je Absender oder Instant Messaging-API. Dies ermöglicht die bilaterale Kommunikation jeweils über denselben Adapter. Dabei kann die Zuordnung von abgearbeiteten Nachrichtendaten zum jeweiligen Absender z.B. basierend auf Informationen zum genutzten Eingangskanal erfolgen.

Beispielsweise ist ein Adapter gemeinsam für wenigstens zwei IM-Anwendungen vorgesehen, wobei der Adapter sowohl gemeinsame als auch spezifische Funktionen enthält. Eingangsseitig zum Adapter werden Nachrichtendaten geliefert, die nach Abarbeitung an den Absender zurücktransmittiert werden sollen (bilaterale Kommunikation). Die Nachrichtendaten enthalten im plattforminteren Datenstrukturformat in einer der Unterstrukturen in den "Metadaten", insbesondere in der dritten Unterstruktur, das Attribut "Kanal". Deutet dieses Attribut auf die eine der IM-Anwendungen bzw. auf einen spezifischen IM-Dienst hin, so führt der Adapter einen Transformationsprozess zum Strukturieren der Nachrichtendaten in eben dieses Datenformat/Datenstrukturformat durch, was bilateral erfolgen kann.

Gemäß einem Ausführungsbeispiel umfasst die KAA ein an einen/den wenigstens einen Adapter gekoppeltes, im einheitlichen internen Datenstrukturformat KAA-intern kommunizierendes Nachrichtenmodul eingerichtet zur bilateralen Übergabe transmittierter strukturierter/formatierter Nachrichtendaten von/zu wenigstens einem weiterem internen Modul der KAA und/oder von/zu wenigstens einer grafischen Benutzerschnittstelle in der KAA und/oder von/zu wenigstens einer Datenbank der KAA. Dies liefert Vorteile hinsichtlich Verteilung und Zuweisung von Nachrichtendaten. Diese Funktion kann zentral vom Nachrichtenmodul übernommen werden, insbesondere unabhängig von der Anzahl verwendeter Adapter. Seitens der Datenbank können dabei auch Informationsdaten abgerufen werden.

Mittels des Nachrichtenmoduls wird eine Kommunikation von Absendern/Empfängern über unterschiedliche IM-Dienste hinweg ermöglicht. Dies ist ohne die KAA nicht möglich. Ein Absender konnte bisher basierend auf einem bestimmten IM-Dienst nur Nutzer adressieren, welche diesen IM-Dienst ebenfalls nutzen.

Das Nachrichtenmodul liest zunächst die empfangenen/eingehenden Nachrichtendaten aus, und prüft dabei, ob der jeweilige Absender schon bekannt bzw. in einer Datenbank der KAA hinterlegt ist, und speichert die Kontaktdaten des Absenders gegebenenfalls in der Datenbank. Auch die Nachrichtendaten können dabei in dieser oder einer weiteren Datenbank gespeichert werden. Dabei kann auch eine Zuordnung der Nachrichtendaten zu bereits bestehenden, gespeicherten Kontaktdaten/Absendern erfolgen. Nachrichtendaten werden vom Nachrichtenmodul an ein Prozessmodul übermittelt, mittels welchem die Art der Reaktion und die Art der automatisierten Abarbeitung der Nachrichtendaten vorgegeben werden kann.

Ferner kann das Nachrichtenmodul Empfangsbestätigungen ("receipts") für die Nachrichten senden und empfangen. Fall 1 (Nachrichtenempfang): Das Nachrichtenmodul sendet eine Empfangsbestätigung zurück an den IM-Dienst, mit der Folge, dass dem Absender auf seinem mobilen Endgerät ein Hinweis angezeigt werden kann, dass die Nachricht übermittelt wurde (z.B. "Doppelhaken"-Symbol). Fall 2 (Nachrichtenversand): Die KAA erhält vom jeweiligen IM-Dienst eine Empfangsbestätigung, sobald die Antwortnachricht an den Absender übermittelt wurde. Das Nachrichtenmodul kann diese Empfangsbestätigung verarbeiten, insbesondere indem in der Datenbank vermerkt wird, dass die Nachricht übermittelt wurde. Darüber hinaus können im Nachrichtenmodul Mechanismen bzw. Prozess-Schemata zum späteren erneuten Versenden von Nachrichten hinterlegt sein, sofern ein IM-Dienst vorübergehend nicht erreichbar ist.

Insbesondere kommuniziert das Nachrichtenmodul nur über die eingangsseitige Schnittstelle nach außen bzw. extern von der KAA, nicht aber über eine/die ausgangsseitige Schnittstelle.

Das Nachrichtenmodul kann als eine Art Verteiler beschrieben werden. Insbesondere kann mittels des Nachrichtenmoduls eine Weiterleitung von Daten entweder zu einem Gruppennachrichtenmodul (Gruppen-Kommunikation) oder zum Prozessmodul erfolgen. Das Gruppennachrichtenmodul kann direkt auf eine/die Datenbank zugreifen, und/oder die Kommunikation bzw. den Datenaustausch mit dem Prozessmodul initiieren. Eine Interaktion zwischen Gruppennachrichtenmodul und Prozessmodul kann beispielsweise in Abhängigkeit von bestimmten Schlagwörtern in den Nachrichtendaten erfolgen. Enthält eine Nachricht beispielsweise im Zusammenhang mit einer Hausverwaltung das Schlagwort "Mülltonnenleerungsplan", sendet das Prozessmodul automatisch den Plan für das jeweilige Haus an die entsprechende Empfänger-Gruppe (Mieter, Bewohner). Wahlweise ist das Prozessmodul eingerichtet, zeitgesteuerte und/oder themenbezogene Nachrichten an die Empfänger-Gruppe zu transmittieren, beispielsweise Informationen zur Schneeräumung, insbesondere in Reaktion auf einen Schnee ankündigenden Wetterbericht.

Gemäß einem Ausführungsbeispiel weist die KAA, insbesondere das Nachrichtenmodul ein mit einer/der Datenbank der KAA gekoppeltes Gruppennachrichtenmodul eingerichtet zur Selektion und Zuweisung strukturierter/formatierter Nachrichtendaten zu wenigstens einer Gruppe einer Mehrzahl von Empfängern auf. Dies ermöglicht eine effiziente Verteilung der Nachrichtendaten auf die einzelnen Empfänger, insbesondere einzelne mobile Endgeräte. Das Gruppennachrichtenmodul kann dabei dieselben Funktionalität wie das Nachrichtenmodul aufweisen, oder aber ebenfalls die Funktionalität des Nachrichtenmodules nutzen, insbesondere hinsichtlich Übergabe transmittierter strukturierter/formatierter Nachrichtendaten. (Informations-)Daten bezüglich der Mitglieder der jeweiligen Gruppe können dabei KAA-intern aus der Datenbank abgerufen werden, oder auch über eine/die ausgangsseitige Schnittstelle mittels des Prozessmoduls von extern abgerufen werden, insbesondere von einem Unternehmenssystem. Die Transmission zu und von den einzelnen Empfängern kann dabei ausschließlich über die eingangsseitige Schnittstelle erfolgen, wahlweise auch über die ausgangsseitige Schnittstelle.

Gemäß einem Ausführungsbeispiel umfasst die KAA, insbesondere das Nachrichtenmodul ein Gruppennachrichtenmodul, welches in Verbindung mit wenigstens einer Datenbank der KAA steht und/oder ausgangsseitig in Verbindung mit wenigstens einer Empfänger-API steht, insbesondere über eine ausgangsseitige Schnittstelle. Dies ermöglicht eine effiziente Gruppen-Kommunikation mit einer Vielzahl von Empfängern oder Absendern unabhängig von der Art der jeweils genutzten Instant Messaging-API, insbesondere in Echtzeit. Beispielsweise können Nachrichtendaten vom Gruppennachrichtenmodul auch zum Prozessmodul transmittiert werden, und von dort werden Informationsdaten mit der Empfänger-API ausgetauscht. Beispielsweise werden Informationsdaten zu einem "Mülltonnenleerungsplan" aus einem bestimmten Unternehmenssystem abgerufen. Somit kann die KAA als Mittler zwischen beliebigen Datenbanken verwendet werden.

Gemäß einem Ausführungsbeispiel umfasst die KAA eine an ein/das Nachrichtenmodul oder an ein/das Gruppennachrichtenmodul gekoppelte Datenbank mit darin abgelegten Informationsdaten des Absenders und/oder der Empfänger, insbesondere Kontaktdaten und wenigstens eine Gruppenzugehörigkeit des Absenders und/oder der Empfänger. Dies ermöglicht eine effiziente Zuordnung der Nachrichtendaten zu Empfängern. Als Datenbank kann eine relationale Datenbank vorgesehen sein. Insbesondere wird eine Architektur für eine elegante, effiziente Kommunikation wahlweise ausschließlich bilateral eingangsseitig bereitgestellt. Die gruppenübergreifende Kommunikation kann wahlweise auch ohne Kommunikation über eine/die ausgangsseitige Schnittstelle erfolgen, je nach Datengrundlage in der Datenbank.

Gemäß einem Ausführungsbeispiel umfasst die KAA ein an ein/das Nachrichtenmodul gekoppeltes Prozessmodul eingerichtet zur Analyse und Zuordnung der strukturierten/formatierten Nachrichtendaten zu wenigstens einem insbesondere im Prozessmodul hinterlegten Kommunikationsprozess und zur automatisierten Abarbeitung der Nachrichtendaten basierend auf einem selektierten Kommunikationsprozess und zum Zurückliefern abgearbeiteter Nachrichtendaten bzw. der entsprechenden Antwortnachricht zum Nachrichtenmodul, insbesondere in einer Funktion als Mittler zwischen dem Nachrichtenmodul und einer/der Datenbank und/oder einer Empfänger-API eines externen Unternehmens(kommunikations-)systems. Dies liefert den Vorteil großer Flexibilität der KAA, sei es hinsichtlich kommunikativer Abläufe, sei es hinsichtlich Konfiguration. Dabei kann die ausgangsseitige Schnittstelle zum Unternehmenssystem ebenfalls durch einen oder mehrere Adapter gebildet sein, insbesondere mit derselben Funktionalität wie die zuvor beschriebenen Adapter der Schnittstelle zur jeweiligen IM-API.

Mit anderen Worten: Das Prozessmodul generiert Antwortnachrichten und liefert diese an das Nachrichtenmodul zurück. Abgearbeitete Nachrichtendaten können dabei zumindest teilweise in Form einer Antwortnachricht bereitgestellt werden.

Das Selektieren des Kommunikationsprozesses kann im Zusammenhang mit einer Kommunikation ausschließlich zwischen dem Absender und der KAA, und/oder zwischen dem Absender und einem Servicemitarbeiter, oder auch im Zusammenhang mit einer Gruppenkommunikation erfolgen. Das Prozessmodul kann dabei auf eine Datenbank und/oder über eine ausgangsseitige Schnittstelle auf ein KAA-externes Unternehmenssystem zugreifen.

Im Prozessmodul kann die Entscheidung getroffen werden, ob bzw. in welchem Grade eine automatisierte Abarbeitung erfolgen soll, insbesondere anhand des Status der Prozessinstanz. Das Prozessmodul ist eingerichtet zur Abfrage oder Zuordnung von Prozessdaten bezüglich der jeweiligen Nachrichtendaten, insbesondere basierend auf Vorarbeiten durch das Nachrichtenmodul. Das Prozessmodul ist eingerichtet für eine Abfrage, ob der jeweilige Prozess oder die Kundenanfrage bereits einmal vorgekommen ist oder bereits in einer/der Prozess-Bibliothek hinterlegt ist. Auch ist das Prozessmodul eingerichtet für eine Identifikation oder Definition eines Stadiums der Nachrichtendaten bezüglich einer Sequenz einzelner Schritte eines Prozesses. Handelt es sich bei den Nachrichtendaten beispielsweise um die Anforderung eines Immobilien-Exposes, wobei für die Bereitstellung des Immobilien-Exposes beispielsweise drei Kriterien erfüllt sein müssen (umfassend z.B. die Bekanntgabe der persönlichen Adresse des Absenders durch den Absender), so ist das Prozessmodul eingerichtet für die Einordnung der aktuellen Nachrichtendaten in diese Sequenz, und kann vorgeben, ob der Absender z.B. nochmals um die Bekanntgabe seiner persönlichen Adresse gebeten wird. Das Prozessmodul kann also den abgearbeiteten Nachrichtendaten eine oder mehrere Fragen eingliedern, welche durch den Absender beantwortet werden müssen.

Es hat sich gezeigt, dass eine Aufteilung einzelner Funktionen auf einzelne Module eine gute Robustheit der KAA sicherstellen kann. Auch wird hierdurch die Flexibilität in der Anwendung der KAA erhöht, und/oder die Wartbarkeit ("maintainability") sowie Skalierbarkeit verbessert. Die Option, die KAA auf einfache Weise skalieren zu können, hat große Vorteile hinsichtlich eines breiten Anwendungsspektrums der KAA. Dies betrifft auch weitere Module der KAA, die bevorzugt jeweils funktional autonom bereitgestellt werden. Dies erleichtert nicht zuletzt auch eine Fehlererkennung.

Das Nachrichtenmodul übergibt empfangene Nachrichtendaten an das Prozessmodul, in welchem eine automatisiere Abfrage bzw. Selektion erfolgen kann, ob die Nachricht automatisch beantwortet werden kann/soll oder ob die Nachricht zu Beantwortung an eine/die grafische Benutzerschnittstelle weitergeleitet wird. Die Funktionsweise des Nachrichtenmoduls kann dabei dieselbe sein/bleiben, unabhängig davon ob die Antwortnachricht manuell über eine grafische Benutzerschnittstelle oder automatisiert mittels des Prozessmoduls beantwortet wird.

Es hat sich gezeigt, dass es für interne Verarbeitung der Nachrichtendaten vorteilhaft ist, wenn das Nachrichtenmodul dem Prozessmodul (aus Sicht eingehender Nachrichtendaten) vorgeschaltet ist, und aus Sicht ausgehender Nachrichtendaten bzw. Informationsdaten dem Prozessmodul nachgeschaltet ist. Die KAA liefert dann eine Architektur mit einer strengen Reihenanordnung von Adapter vor Nachrichtenmodul vor Prozessmodul (aus Sicht eingehender Nachrichtendaten). Unabhängig davon können sowohl das Nachrichtenmodul als auch das Prozessmodul an eine/die Datenbank gekoppelt sein.

Das Prozessmodul kann dabei wenigstens zwei Funktionen erfüllen.

Erste Funktion: Definition von Prozessabläufen als "Blaupause" des Kommunikationsprozesses. Einzelne Schritte eines Kommunikationsprozesses können vorgegeben werden. Unterschiedlichen Arten von Nachrichtendaten können unterschiedliche Prozessablaufschemata ("Prozessfluss") zugewiesen werden. Der Inhalt der mittels der KAA transmittierten Nachrichtendaten kann mittels des Prozessmoduls vordefiniert werden.
Zweite Funktion: Abspeichern des aktuellen Status von Prozessinstanzen. Für jeden Kommunikationspartner/ Absender wird basierend auf dem jeweiligen vordefinierten Prozessablauf ("Blaupause") eine eigene Instanz des Prozesses erstellt. Das Prozessmodul zeichnet auf, in welchem Schritt die jeweilige Instanz steht und entscheidet anhand der Blaupause, was der jeweils nächste Schritt und die damit verbundene Antwortnachricht sein soll. Eine wichtige Status-Information zu einer Prozess-Instanz ist beispielsweise die Eigenschaft "automatisiert: ja/nein". Über diese Eigenschaft entscheidet das Prozessmodul, ob automatisch geantwortet wird, oder die Beantwortung durch einen Servicemitarbeiter über eine Chat-Oberfläche erfolgen soll.

Das Prozessmodul kann so programmiert sein, dass jede Prozessinstanz zunächst automatisiert ist bzw. jeder Schritt automatisiert abgearbeitet wird. Durch bestimmte Nachrichtentexte (wie etwa: "Ich möchte einen Mitarbeiter sprechen.") oder durch manuelles Eingreifen einer Person über die Chat-Oberfläche kann eine Prozessinstanz in den nicht-automatisierten Zustand versetzt werden.

Gemäß einer Ausführungsform erfolgt die Transmission der Nachrichtendaten über die IM-API und über den Adapter an ein/das Nachrichtenmodul und weiter an ein/das Prozessmodul, indem die Nachrichtendaten zwischen Adapter und Nachrichtenmodul gegenseitig über so genannte "Webservices" aufgerufen werden. Die "Kernmodule" der KAA (Nachrichtenmodul, Prozessmodul, Gruppennachrichtenmodul) können dabei innerhalb derselben "Anwendung" angeordnet sein und eingerichtet sein, Funktionen der anderen Module über klassische "Methodenaufrufe" aufzurufen.

Gemäß einem Ausführungsbeispiel ist die KAA eingerichtet zur bilateralen Transmission von Informationsdaten zwischen wenigstens zwei Empfänger-Unternehmenssystemen, insbesondere über ein/das Prozessmodul und über einen weiteren Adapter zu einer jeweiligen Unternehmenssystem-API. Dabei kann für ein jeweiliges zu kontaktierendes Unternehmenssystem in der KAA ein spezifischer Adapter vorgesehen sein, bzw. eine spezifische Komponente innerhalb eines übergreifenden Adapters.

Die abgearbeiteten Nachrichtendaten können dabei auch im Prozessmodul hinterlegte standardisierte Antwortnachrichtendaten umfassen oder vollständig dadurch gebildet sein.

Das Prozessmodul kann eingerichtet sein zur Transmission von Informationsdaten von oder zur Datenbank, und/oder von oder zum externen Unternehmenssystem oder dessen API. Das Prozessmodul kann eingerichtet sein zur Transmission von Nachrichtendaten vom oder zum Nachrichtenmodul und/oder vom oder zum Gruppennachrichtenmodul, jeweils unabhängig voneinander. Ebenso wie das Nachrichtenmodul kann das Prozessmodul eingerichtet sein zur bilateralen Übergabe transmittierter strukturierter/formatierter Nachrichtendaten von/zu wenigstens einem weiterem internen Modul der KAA und/oder von/zu wenigstens einer grafischen Benutzerschnittstelle in der KAA und/oder von/zu wenigstens einer Datenbank der KAA. Insbesondere kommuniziert das Prozessmodul nur über die ausgangsseitige Schnittstelle nach außen bzw. extern von der KAA, nicht aber über eine/die eingangsseitige Schnittstelle. Das Prozessmodul interagiert dann nur mit Adaptern zu einem jeweiligen Unternehmenssystem, nicht aber mit Adaptern seitens der IM-APIs.

Gemäß einem Ausführungsbeispiel umfasst das Prozessmodul eine Prozess-Bibliothek mit der Art und Weise der zumindest teilweise automatisierten Abarbeitung vorgebenden Prozessablaufschemata, jeweils spezifisch in Abhängigkeit der durch Analyse der Nachrichteninhalte identifizierten Art der Nachrichtendaten, oder wobei das Prozessmodul an eine in der Datenbank hinterlegte Prozess-Bibliothek gekoppelt ist. Dies ermöglicht einen hohen Automatisierungsgrad. Die Prozessablaufschemata können individuell je Anwendung vorgegeben werden. Die jeweiligen Prozesse können dabei aus mehreren Schritten gebildet sein. Jedem Schritt sind mindestens eine oder auch mehrere Transitionen zu Folgeschritten zugeordnet. Die Transition kann automatisch oder abhängig vom im jeweiligen Schritt empfangenen Nachrichteninhalten/Nachrichtendaten erfolgen.

Gemäß einem Ausführungsbeispiel umfasst die KAA wenigstens eine Kommunikationsschnittstelle zu einer interagierenden Empfänger-Person, insbesondere bereitgestellt an oder über eine dafür eingerichtete grafische Benutzerschnittstelle in Form von einer Chat-Oberfläche. Dies ermöglicht auf einfache Weise eine Interaktion eines Servicemitarbeiters mit dem Absender oder einem der Empfänger im teilautomatisierten Kommunikationsprozess. Die Chat-Oberfläche kann als Applikation (APP) mit Anbindung an die Datenbank der KAA ausgebildet sein, sei es als Web-Applikation oder Desktop-Applikation.

Gemäß einem Ausführungsbeispiel umfasst die KAA wenigstens eine mit einem/dem Prozessmodul der KAA gekoppelte Prozesskonfigurations-Oberfläche, insbesondere mit grafischer Benutzerschnittstelle. Dies ermöglicht auf einfache Weise einen Eingriff, z.B. eine Erweiterung oder Konfiguration, bezüglich der Funktionalität der KAA, oder bezüglich einzelner Ablauf-Schemata oder in einer Bibliothek hinterlegten Prozess-Vorgaben.

Die KAA kann eingerichtet sein zur Selektion nicht automatisiert abarbeitbarer Nachrichtendaten aus den strukturierten/formatierten Nachrichtendaten und zur Transmission dieser Nachrichtendaten zu einem Servicemitarbeiter bzw. zu einer Person, die nicht der gewünschte Empfänger ist, sondern nur Mittler für Information. Hierdurch können automatisierte Prozesse und individuelle (Kunden-)Betreuung auf effiziente Weise miteinander verknüpft werden. Insbesondere kann das Nachrichtenmodul eingerichtet sein zur Transmission von nicht automatisiert abarbeitbaren Nachrichtendaten zur Chat-Oberfläche. Das Nachrichtenmodul kann also die Funktion einer zentralen Weiche oder Schaltstelle für die Informations-/Datenflüsse übernehmen. Adapter, Prozessmodul und weitere Module oder Komponenten können sternförmig um das Nachrichtenmodul angeordnet bzw. daran gekoppelt sein.

Gemäß einem Ausführungsbeispiel umfasst die KAA eine ausgangsseitige Schnittstelle zu einer Empfänger-API eines externen Unternehmens(kommunikations-)systems, insbesondere bereitgestellt durch wenigstens einen an eine API des Unternehmenssystems koppelbaren Adapter. Hierdurch kann eine Nachricht effizient auf bestimmte Empfängergruppen verteilt werden, oder aber es kann eine Informationsabfrage erfolgen, um die Nachrichtendaten intern in der KAA möglichst effizient zu verarbeiten. Das Kontaktieren des Unternehmenssystems kann dabei zeitlich mit Prozessen zwischen den einzelnen Modulen oder gegenüber dem Absender oder einzelnen Empfängern abgestimmt werden, insbesondere mittels des Prozessmoduls. Die Unternehmenssysteme und ihre jeweilige API müssen dabei nicht Teil der KAA werden. Dies kann größtmögliche Flexibilität für die Auswahl der Anwendungsmöglichkeiten liefern.

Als ausgangsseitige Schnittstelle ist dabei eine Schnittstelle zu verstehen, über welche die KAA nicht mit dem Absender, sondern mit einem oder mehreren anderen Systemen oder Empfängern kommuniziert, insbesondere um Informationsdaten abzurufen, welche dem Absender über die eingangsseitige Schnittstelle bereitgestellt werden sollen.

Gemäß einem Ausführungsbeispiel ist die KAA gekennzeichnet durch eine vom jeweiligen mobilen Endgerät mittels einer jeweiligen IM-Anwendung adressierbare Kontaktadresse für die KAA und/oder für wenigstens eine Gruppe von in einer/der Datenbank der KAA hinterlegten oder über eine ausgangsseitige Schnittstelle adressierbaren Empfängern. Dies ermöglicht das Kontaktieren der KAA bzw. der gewünschten Gruppe ausgehend von einem beliebigen mobilen Endgerät. Als Kontaktadresse ist dabei insbesondere eine vom jeweiligen IM-Dienst genutzte Telefonnummer oder eine vom jeweiligen IM-Dienst vorgegebene/vergebene Identifikationsnummer zu verstehen, also eine Art IM-Identifikationsnummer. Für den Fall, dass der Absender eine Gruppe kontaktieren möchte, kann die Kontaktadresse der Gruppe die Kontaktadresse der KAA substituieren. Die Kontaktadresse der Gruppe kann also die Kontaktadresse der KAA umfassen, so dass der Absender nur eine einzige Kontaktadresse eingeben muss, um mittels der KAA mit der Gruppe zu kommunizieren. Wählt der Absender hingegen (nur) die Kontaktadresse der KAA aus, so kann die Kommunikation zwischen dem Absender und der KAA erfolgen (Mensch zu Maschine-Kommunikation), ohne Einbezug einer Gruppe. Dabei kann ein Wechsel während der Mensch-Maschine-Kommunikation hin zur Mensch zu Gruppe-Kommunikation beispielsweise dadurch initiiert werden, dass Nachrichteninhalte hinsichtlich bestimmter Schlagworte analysiert werden. Genannt werden kann z.B. das Schlagwort "@MeineNachbarschaft" oder linguistische Abwandlungen davon.

Zumindest eine der zuvor genannten Aufgaben wird auch gelöst durch eine Kommunikationsautomatisierungsanordnung (KAA) eingerichtet zur automatisierten bilateralen Transmission von Nachrichtendaten zwischen wenigstens einem mobilen Endgerät eines Absenders einerseits und dem Absender selbst oder wenigstens einer Gruppe von Empfängern andererseits, wobei die KAA eingerichtet ist zur zumindest teilweise automatisierten internen Abarbeitung der Nachrichtendaten und eingerichtet ist zur bilateralen Transmission der Nachrichtendaten über eine Mehrzahl von IM-APIs von vom jeweiligen mobilen Endgerät genutzten IM-Anwendungen bzw. über den entsprechenden IM-Dienst, wobei die KAA eingangsseitig an einer eingangsseitigen Schnittstelle zur jeweiligen IM-API eine Mehrzahl von an die jeweilige IM-API koppelbaren Adaptern eingerichtet zum Strukturieren und wahlweise auch Formatieren eingehender Nachrichtendaten auf ein einheitliches internes Datenstrukturformat für die KAA aufweist, wobei die Adapter eingerichtet sind zur bilateralen Kommunikation von und zur jeweiligen IM-API und eingerichtet sind zum Zurücktransformieren abgearbeiteter Nachrichtendaten und zum Bereitstellen der abgearbeiteten Nachrichtendaten an der oder über die jeweilige IM-API für den Absender jeweils spezifisch je Absender oder IM-API, wobei die KAA ein an die Adapter gekoppeltes, im Datenstrukturformat kommunizierendes Nachrichtenmodul eingerichtet zur bilateralen Übergabe transmittierter strukturierter/formatierter Nachrichtendaten von/zu wenigstens einem weiterem internen Modul der KAA und von/zu wenigstens einer grafischen Benutzerschnittstelle in der KAA und von/zu wenigstens einer Datenbank der KAA mit darin abgelegten Informationsdaten umfassend Kontaktdaten und wenigstens eine Gruppenzugehörigkeit der Absender und/oder Empfänger umfasst, wobei die KAA ein mit der Datenbank gekoppeltes Gruppennachrichtenmodul eingerichtet zur Selektion und Zuweisung strukturierter/formatierter Nachrichtendaten zu wenigstens einer Gruppe einer Mehrzahl von Absendern und/oder Empfängern aufweist, wobei das Gruppennachrichtenmodul in Verbindung mit der Datenbank und/oder ausgangsseitig mit wenigstens einer Empfänger-API steht, wobei ein Prozessmodul an das Nachrichtenmodul gekoppelt ist und eingerichtet ist zur Analyse und Zuordnung der strukturierten/formatierten Nachrichtendaten zu wenigstens einem im Prozessmodul hinterlegten Kommunikationsprozess und zur automatisierten Abarbeitung der Nachrichtendaten basierend auf einem selektierten Kommunikationsprozess und zum Zurückliefern abgearbeiteter Nachrichtendaten zum Nachrichtenmodul. Dies liefert eine besonders effiziente und vielseitige Art der Kommunikation, einerseits unter Zuhilfenahme einer Automatisierung durch die KAA, andererseits gruppenübergreifend. Das Prozessmodul kann dabei fallweise zum Einsatz kommen, insbesondere in Reaktion auf die Identifikation bestimmter Schlagwörter.

Das Gruppennachrichtenmodul ist ausgangsseitig nicht auf das Prozessmodul angewiesen. Sendet ein Absender eine Nachricht an eine Gruppe von Empfängern, so braucht das Prozessmodul nicht einzugreifen, sondern die Abarbeitung kann wahlweise ausschließlich durch das Nachrichtenmodul und/oder das Gruppennachrichtenmodul erfolgen. Gruppennachrichten können wahlweise lediglich an die gewünschten Empfänger weitergeleitet werden, ohne dass eine computerautomatisierte Antwort erfolgen muss. Nichtsdestotrotz kann optional eine teilweise Automatisierung erfolgen, indem bereits die KAA eine Antwort zumindest teilweise formuliert und bereitstellt, sei es nur für den Absender, sei es auch für die Empfänger. So kann vermieden werden, dass der Absender z.B. gar keine Information, gar kein Feedback erhält, und die Kommunikation bleibt auch in der Gruppe sehr effizient, ähnlich wie bei einer Telefonkonferenz.

Zumindest eine der zuvor genannten Aufgaben wird wie erwähnt auch gelöst durch ein Computerprogrammprodukt eingerichtet zum Abarbeiten von Nachrichtendaten in einem zumindest teilweise automatisierten bilateralen Kommunikationsprozess zwischen wenigstens einem mobilen Endgerät eines Absenders der Nachrichtendaten einerseits und dem Absender selbst oder wenigstens einem Empfänger andererseits, wobei das Computerprogrammprodukt eingerichtet ist zur bilateralen Kommunikation zwischen wenigstens einer IM-API bzw. dem entsprechenden IM-Dienst einer vom Absender genutzten Instant Messaging-Anwendung und dem Empfänger und/oder zwischen dem Absender und einer als Plattform für das Computerprogrammprodukt genutzten KAA basierend auf einem internen Datenstrukturformat, unabhängig vom Format oder von der Struktur der eingehenden Nachrichtendaten, insbesondere jeweils in einer zuvor beschriebenen KAA. Dies liefert hohe Autonomie der Plattform und ermöglicht die Kommunikation in Gruppen oder über Gruppen hinweg.

Zumindest eine der zuvor genannten Aufgaben wird wie erwähnt auch gelöst durch ein Computerprogrammprodukt eingerichtet zum Abarbeiten von Nachrichtendaten in einem zumindest teilweise automatisierten bilateralen Kommunikationsprozess zwischen einer Mehrzahl von Instant Messaging-APIs von jeweils durch ein mobiles Endgerät eines Absenders der Nachrichtendaten genutzten Instant Messaging-Anwendungen bzw. über den entsprechenden IM-Dienst einerseits und wenigstens einem Empfänger andererseits, wobei das Computerprogrammprodukt eine grafische Benutzerschnittstelle eingerichtet für manuelle Abarbeitung von auf ein internes Datenstrukturformat, also unabhängig vom Format oder von der Struktur der eingehenden Nachrichtendaten, strukturierten/formatierten Nachrichtendaten umfasst, insbesondere eine in eine zuvor beschriebene KAA integrierte grafische Benutzerschnittstelle. Dies ermöglicht auch die möglichst effiziente und vollständige Abarbeitung von Nachrichtendaten, die nicht vollständig automatisiert abgearbeitet werden können.

Zumindest eine der zuvor genannten Aufgaben wird demnach auch gelöst durch einen Datenträger mit einem solchen darauf hinterlegtem Computerprogrammprodukt oder einer darauf hinterlegten, hier beschriebenen KAA, oder durch einen Computer oder ein Computersystem oder eine virtuelle Maschine oder wenigstens ein Hardwareelement damit.

Zumindest eine der zuvor genannten Aufgaben wird demnach auch gelöst durch ein Computerprogramm eingerichtet zum Bereitstellen der hier beschriebenen KAA bzw. der hier beschriebenen Verfahrensschritte.

Zumindest eine der zuvor genannten Aufgaben wird demnach auch gelöst durch ein Datenstrukturprodukt zur Verarbeitung intern in der KAA, insbesondere transformiert an der ein- oder ausgangsseitigen Schnittstelle, basierend auf dem einheitlichen, hier beschriebenen Datenstrukturformat.

Zumindest eine der zuvor genannten Aufgaben wird demnach auch gelöst durch Verwendung eines Signals als Strom von Daten intern in der KAA, basierend auf dem hier beschriebenen Datenstrukturformat.

Zumindest eine der zuvor genannten Aufgaben wird wie erwähnt auch gelöst durch ein Verfahren zum automatisierten bilateralen Transmittieren und zum zumindest teilweise automatisierten Abarbeiten von Nachrichtendaten in einem zumindest teilweise automatisierten bilateralen Kommunikationsprozess zwischen wenigstens einem mobilen Endgerät eines Absenders einerseits und dem Absender selbst oder wenigstens einem Empfänger oder wenigstens einer Gruppe von Empfängern andererseits, insbesondere in einer zuvor beschriebenen KAA; wobei das bilaterale Transmittieren der Nachrichtendaten über wenigstens eine von einer Mehrzahl von IM-APIs von vom jeweiligen mobilen Endgerät genutzten IM-Anwendungen bzw. über den entsprechenden IM-Dienst erfolgt, wobei eingangsseitig (und bei entgegengesetzter Kommunikationsrichtung also auch ausgangsseitig) von der KAA an einer eingangsseitigen Schnittstelle zur jeweiligen IM-API ein Strukturieren und wahlweise auch Formatieren eingehender Nachrichtendaten auf ein internes Datenstrukturformat der KAA erfolgt und das zumindest teilweise automatisiert interne Abarbeiten strukturierter/formatierter Nachrichtendaten im internen Datenstrukturformat erfolgt. Dies liefert zuvor beschriebene Vorteile. Die Transmission kann dabei als ein Standard-Prozess angesehen werden, wohingegen das interne Abarbeiten erst durch die KAA ermöglicht wird, insbesondre bezüglich einer Vielzahl von Empfängern oder Empfänger-Gruppen.

Dabei können sowohl eingehende als auch strukturierte/formatierte oder abgearbeitete Nachrichtendaten zumindest zwischen wenigstens einem Adapter, einem Nachrichtenmodul und einem Prozessmodul der KAA transmittiert werden. Dies liefert einen bilateralen Kommunikationsprozess mit einem eindeutigen Schema in beide Richtungen.

Dabei können Informationsdaten zumindest zwischen dem Nachrichtenmodul und dem Prozessmodul einerseits und wenigstens einer Datenbank der KAA und wahlweise auch wenigstens einem externen Unternehmenskommunikationssystem oder dessen API andererseits transmittiert werden. Diese Flexibilität liefert die Option, Nachrichtendaten jeweils inhaltsspezifisch abzuarbeiten.

Die Transmission kann bilateral erfolgen, oder auch nur unilateral, also in nur eine Richtung, z.B. nur in Richtung des Empfängers (hin), oder nur in Richtung des Absenders (zurück). Eine erste unilaterale Transmission kann dabei wahlweise auch entkoppelt (zeitlich und/oder inhaltlich entkoppelt) von einer zweiten unilateralen Transmission erfolgen, insbesondere auch dann, wenn es sich um dieselben Nachrichtendaten handelt, deren Beantwortung der Absender wünscht.

Gemäß einer Ausführungsform werden die strukturierten/formatierten Nachrichtendaten selektiv zu einer Mehrzahl von Empfängern oder zu wenigstens einer selektierten Gruppe einer Mehrzahl von Empfängern transmittiert bzw. zugewiesen, insbesondere basierend auf in einer Datenbank der KAA hinterlegten Informationsdaten der Empfänger, insbesondere Kontaktdaten und wenigstens einer Gruppenzugehörigkeit des Absender bzw. der Empfänger. Dies ermöglicht ein effizientes Adressieren auch bei vergleichsweise komplexer Vernetzung der einzelnen Empfänger untereinander. Auch der ursprüngliche Absender bzw. dessen mobiles Endgerät kann dabei ein Empfänger werden. Eine Gruppe von Empfängern kann dabei vorher KAA-intern selektierte Empfänger umfassen, aus einer Vielzahl von optional möglichen Empfängern.

Gemäß einer Ausführungsform erfolgt das Transmittieren der Nachrichtendaten von oder zu einer Vielzahl unterschiedlicher Instant Messaging-APIs, insbesondere mittels mehrerer, jeweils einer der Instant Messaging-APIs zugeordneten Adaptern der KAA, insbesondere in Echtzeit. Dies ermöglicht hohe Effizienz auch bei einer Vielzahl unterschiedlicher IM-Dienste und gleichzeitig eine gute Robustheit der KAA. Eingehende Nachrichtendaten können mittels der KAA unabhängig von der in einem jeweiligen IM-Dienst genutzten Datenstruktur an einer Vielzahl Endgeräten bereitgestellt werden.

PA9c Gemäß einer Ausführungsform umfasst das Formatieren ein Strukturieren der Nachrichtendaten in eine Datenstruktur mit wenigstens drei Unterstrukturen umfassend eine Absenderdaten-Unterstruktur, eine Nachrichteninhalt-Unterstruktur und eine Metadaten-Unterstruktur. Dies ermöglicht, z.B. Nachrichteninhalte und Meta-Informationen jeweils auf individuellen Unterstrukturen anzuordnen, so dass die Automatisierung (Abarbeitung, Selektion, usw.) auf einfache Weise anhand vordefinierter Kriterien (z.B. hinterlegt in einer Prozess-Bibliothek) erfolgen kann, speziell bezüglich einer jeweiligen Unterstruktur.

Gemäß einer Ausführungsform erfolgt das Abarbeiten strukturierter/formatierter Nachrichtendaten jeweils spezifisch basierend auf einem in Abhängigkeit der Art der Nachrichtendaten selektierten Kommunikationsprozess, insbesondere mittels eines separat vom Nachrichtenmodul adressierbaren/kontaktierbaren Prozessmoduls der KAA jeweils in Bezug auf einzelne Schritte einer Sequenz von bilateralen Transmissionen. Dies ermöglicht nicht zuletzt eine spezifische Abarbeitung auch bei vergleichsweise hohem Automatisierungsgrad. Die Art der Nachrichtendaten kann dabei durch Analyse der Nachrichteninhalte identifiziert werden.

Die Identifizierung/Selektion eines jeweils geeigneten Prozesses kann durch Analyse der Nachrichteninhalte insbesondere in der Art von "parsing" des Nachrichtentextes erfolgen. Werden bestimmte Stichwörter oder Nummern identifiziert, wird der diesbezüglich korrelierte Prozess aus der Prozess-Bibliothek gestartet. Beispiel: Enthält die erste eingegangene Nachricht (eingehende, transformierte Nachrichtendaten) eine Mietvertragsnummer, kann der Absender als Bestandskunde identifiziert werden. Es handelt sich mit an Sicherheit grenzender Wahrscheinlichkeit nicht um einen neuen, bisher unbekannten Interessenten. Entsprechend können in der Antwortnachricht (abgearbeitete Nachrichtendaten) mögliche Aktionen für Bestandskunden aufgelistet werden, insbesondere ausschließlich.

Gemäß einer Ausführungsform erfolgt das Transmittieren zwischen dem einen Absender und dem einen Empfänger, wobei beim Abarbeiten der Nachrichtendaten auf die Datenbank zugegriffen wird und den Nachrichtendaten Informationsdaten beigefügt werden, insbesondere mittels eines/des Nachrichtenmoduls. Dies ermöglicht eine Kennzeichnung und Zuordnung der Nachrichtendaten, insbesondere auch eine Kennzeichnung durch einen Namen.

Gemäß einer Ausführungsform erfolgt das Transmittieren zwischen dem einen Absender und einer Empfänger-Gruppe, wobei beim Abarbeiten der Nachrichtendaten über eine ausgangsseitige Schnittstelle über wenigstens einen Adapter und über eine Empfänger-API ein Unternehmenssystem kontaktiert wird, insbesondere mittels des Prozessmoduls. Dies liefert optional die Möglichkeit der Abfrage von Informationsdaten aus externen Unternehmenssystemen.

Gemäß einer Ausführungsform erfolgt das Transmittieren und Abarbeiten in der folgenden Reihenfolge: Empfangen der Nachrichtendaten vom Absender über die Instant Messaging-API über den entsprechenden Adapter, Abarbeitung der Nachrichtendaten im Nachrichtenmodul, Abarbeiten der Nachrichtendaten im Prozessmodul, Transmittieren der Nachrichtendaten über das Nachrichtenmodul und den Adapter zurück, insbesondere in mehreren Iterationen wiederholt bilateral als reine Mensch zu Maschine-Kommunikation zwischen dem einen Absender und dessen Empfänger-Endgerät und der Kommunikationsautomatisierungsanordnung. Dies liefert eine starke Arbeitserleichterung und einen effizienten, hochgradig automatisierbaren Kommunikationsprozess, z.B. in der Immobilienbranche zum Bereitstellen von Immobilienobjektdaten (Informationsdaten).

Gemäß einer Ausführungsform erfolgt das Transmittieren und Abarbeiten in der folgenden Reihenfolge: Empfangen der Nachrichtendaten vom Absender über die Instant Messaging-API über den entsprechenden Adapter, Abarbeitung der Nachrichtendaten im Nachrichtenmodul, Selektion und Zuweisung der Nachrichtendaten zu wenigstens einer Gruppe im Gruppennachrichtenmodul und Transmittieren der Nachrichtendaten zur Gruppe, Transmittieren von Nachrichtendaten über das Gruppennachrichtenmodul und den Adapter zurück, insbesondere in mehreren Iterationen wiederholt bilateral als Mensch zu Gruppen-Kommunikation zwischen dem Absender und wenigstens einer Empfänger-Gruppe. Dies erlaubt eine effiziente Gruppen-Kommunikation, insbesondere ohne Bekanntgabe von Kontaktdaten.

Die zuvor beschriebenen Verfahrensschritte können mit folgenden Verfahrensschritten/Kommunikationsschritten verknüpft sein, sei es chronologisch, sei es simultan: Empfangen der Nachrichtendaten vom Absender über die IM-API über den entsprechenden Adapter, Abarbeitung der Nachrichtendaten im Nachrichtenmodul, Abarbeiten der Nachrichtendaten im Prozessmodul, Weitergabe der Nachrichtendaten zur manuellen Beantwortung an die Benutzeroberfläche, manuelle Eingabe einer Antwort; Transmittieren der Antwort bzw. der abgearbeiteten Nachrichtendaten über das Nachrichtenmodul und den Adapter zurück zum Absender/Empfänger, insbesondere in mehreren Iterationen wiederholt bilateral als Mensch zu Mensch-Kommunikation zwischen dem einen Absender und dessen Empfänger-Endgerät und einer die Benutzeroberfläche der Kommunikationsautomatisierungsanordnung bedienenden Person/Servicemitarbeiter.

Gemäß einer Ausführungsform werden den Nachrichtendaten beim Transmittieren zurück zum Absender bzw. zu einer Empfänger-Gruppe Informationsdaten aus einer ersten Unterstruktur des Datenstrukturformates vorangestellt, insbesondere der Name oder Vorname des Absenders (also des Emittenten der ursprünglichen Nachricht) oder wenigstens eines Empfängers einer Empfänger-Gruppe (welcher Empfänger dann auch zum Absender von Nachrichtendaten wird). Dies liefert einen guten Überblick auch bei einer Vielzahl von Mitgliedern der Empfänger-Gruppe. Jeder Empfänger kann dabei zum Absender werden.

Zumindest eine der zuvor genannten Aufgaben wird auch gelöst durch ein Verfahren zum automatisierten bilateralen Transmittieren und zum zumindest teilweise automatisierten Abarbeiten von Nachrichtendaten in einem zumindest teilweise automatisierten bilateralen Kommunikationsprozess zwischen wenigstens einem mobilen Endgerät eines Absenders einerseits und dem Absender selbst oder wenigstens einer Gruppe von Empfängern andererseits, insbesondere in einer zuvor beschriebenen Kommunikationsautomatisierungsanordnung; wobei das bilaterale Transmittieren der Nachrichtendaten über wenigstens eine von einer Mehrzahl von Instant Messaging-APIs von vom jeweiligen mobilen Endgerät genutzten Instant Messaging-Anwendungen erfolgt, wobei an einer eingangsseitigen Schnittstelle zur jeweiligen Instant Messaging-API ein Strukturieren und wahlweise auch Formatieren eingehender Nachrichtendaten auf ein internes Datenstrukturformat der Kommunikationsautomatisierungsanordnung erfolgt und das zumindest teilweise automatisierte interne Abarbeiten strukturierter/formatierter Nachrichtendaten im internen Datenstrukturformat erfolgt, wobei die strukturierten/formatierten Nachrichtendaten zu wenigstens einer Gruppe einer Mehrzahl von Absendern und/oder Empfängern transmittiert werden, wobei das Transmittieren der Nachrichtendaten zwischen einer Vielzahl unterschiedlicher Instant Messaging-APIs erfolgt, insbesondere mittels mehrerer, jeweils einer der Instant Messaging-APIs zugeordneten Adapter, wobei das Abarbeiten strukturierter/formatierter Nachrichtendaten jeweils spezifisch basierend auf einem in Abhängigkeit der Art der Nachrichtendaten selektierten Kommunikationsprozess erfolgt, insbesondere mittels eines Prozessmoduls der Kommunikationsautomatisierungsanordnung. Dies liefert eine Vielzahl zuvor genannter Vorteile.

Zumindest eine der zuvor genannten Aufgaben wird wie erwähnt auch gelöst durch ein zuvor beschriebenes Verfahren, ausgebildet als computerimplementiertes Verfahren.

Zumindest eine der zuvor genannten Aufgaben wird wie erwähnt auch gelöst durch Verwendung eines Computerprogrammproduktes oder einer KAA zum Abarbeiten von Nachrichtendaten in einem zumindest teilweise automatisierten Kommunikationsprozess zwischen wenigstens einem mobilen Endgerät eines Absenders der Nachrichtendaten einerseits und wenigstens einem Empfänger andererseits, wobei mittels des Computerprogrammproduktes ein bilaterales Transmittieren der Nachrichtendaten über wenigstens eine von einer Mehrzahl von IM-APIs von vom jeweiligen mobilen Endgerät des Absenders genutzten IM-Anwendungen bzw. über den entsprechenden IM-Dienst erfolgt, und wobei mittels des Computerprogrammproduktes ein Strukturieren und wahlweise auch Formatieren eingehender Nachrichtendaten auf ein internes Datenstrukturformat erfolgt und ein zumindest teilweise automatisiertes internes Abarbeiten der strukturierten/formatierten Nachrichtendaten im internen Datenstrukturformat erfolgt, bevor die abgearbeiteten Nachrichtendaten wieder zurücktransformiert und dem Empfänger oder Absender über die IM-API bereitgestellt werden, insbesondere Verwendung eines Computerprogrammproduktes in einer zuvor beschriebenen KAA für bilaterale Kommunikation mit einer Empfänger-Gruppe. Hierdurch ergeben sich zuvor genannte Vorteile.

Zumindest eine der zuvor genannten Aufgaben wird wie erwähnt auch gelöst durch Verwendung eines Computerprogrammproduktes oder einer KAA zum automatisierten Abarbeiten von Nachrichtendaten in einem zumindest teilweise automatisierten Kommunikationsprozess zwischen wenigstens einem mobilen Endgerät eines Absenders der Nachrichtendaten einerseits und wenigstens einem Empfänger andererseits, wobei mittels des Computerprogrammproduktes oder der KAA wenigstens eine IM-API bzw. der entsprechende IM-Dienst für bilaterale Kommunikation zwischen Absender und Empfänger und/oder zwischen Absender und KAA genutzt wird, insbesondere eine Mehrzahl von IM-APIs für bilaterale Kommunikation mit einer Empfänger-Gruppe. Hierdurch ergeben sich zuvor genannte Vorteile.

Zumindest eine der zuvor genannten Aufgaben wird wie erwähnt auch gelöst durch Verwendung wenigstens eines Adapters zum Strukturieren und wahlweise auch Formatieren und Transmittieren von Nachrichtendaten in einem zumindest teilweise automatisierten Kommunikationsprozess zwischen wenigstens einem mobilen Endgerät eines Absenders der Nachrichtendaten einerseits und wenigstens einer vorselektierten Gruppe von Empfängern andererseits, wobei die Nachrichtendaten von einer Mehrzahl von Instant Messaging-APIs bzw. Instant Messaging-Diensten übernommen, auf ein einheitliches internes Datenstrukturformat strukturiert/formatiert und nach zumindest teilweise automatisierter Abarbeitung individuell zurücktransformiert wieder an der jeweiligen Instant Messaging-API bereitgestellt werden, insbesondere Verwendung einer Mehrzahl von Adaptern für ein Computerprogrammprodukt oder in einer zuvor beschriebenen Kommunikationsautomatisierungsanordnung für bilaterale Kommunikation mit einer Empfänger-Gruppe.

Dies liefert zuvor beschriebene Vorteile. Das Selektieren der wenigstens einen Gruppe von Empfängern kann dabei mittels des (Gruppen-)Nachrichten- und/oder Prozessmoduls erfolgen.

Im Folgenden wird die KAA bzw. IM2PAP anhand des Beispiels einer Kundenanfrage eines Absenders an ein Unternehmen (Empfänger) beschrieben. Die Nachrichtendaten werden also zumindest teilweise durch die Kundenanfrage (Kundennachricht) gebildet. Jedoch kann die hier beschriebene KAA auch für andere Nachrichtendaten genutzt werden, nicht nur für Anfragen von Kunden.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
Figur 1 in schematischer Darstellung eine KAA gemäß einem Ausführungsbeispiel;
Figur 2 in schematischer Darstellung ein Beispiel für eine mehrere IM-Dienste überbrückende Gruppenkommunikation basierend auf einer KAA gemäß einem Ausführungsbeispiel; und
Figur 3 in schematischer Darstellung ein Beispiel für den Daten- und Nachrichtenfluss bei einer mehrere Instant Messaging-Dienste überbrückenden Gruppenkommunikation basierend auf einer KAA gemäß einem Ausführungsbeispiel.

### DETAILLIERTE BESCHREIBUNG DER FIGUREN

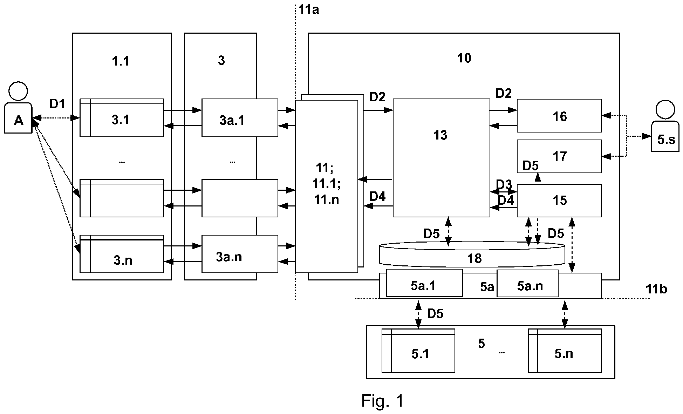

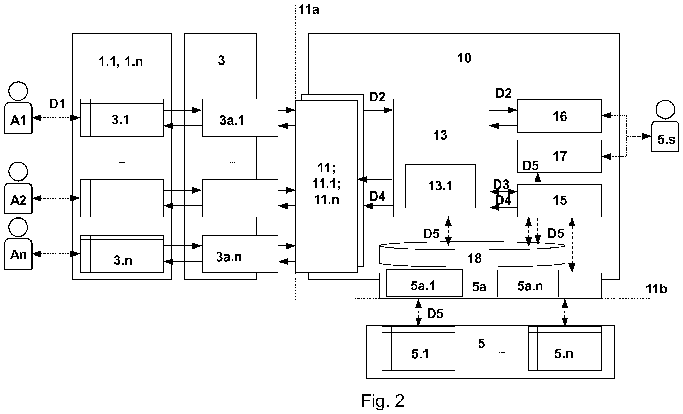

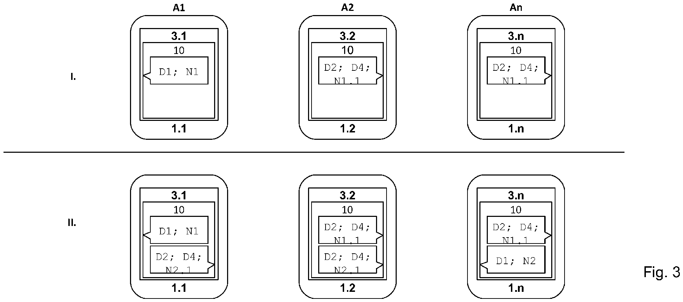

In der Fig. 1 ist eine übergreifende KAA bzw. Plattformarchitektur (hier als IM2PAP bezeichnet) sowie der damit verbundenen Datenfluss dargestellt. Figur 2 zeigt eine exemplarische Gruppenkommunikation zwischen mehreren Absendern/Empfängern. Der zugrunde liegende Datenfluss wird im Zusammenhang mit Figur 3 erläutert.

Die vorliegende Erfindung zeichnet sich durch eine Anordnung bzw. Plattform aus, die nicht nur das automatisierte Abarbeiten von Anfragen (und dabei optional das automatisierte Bereitstellen von Informationen) für einen Absender (anfragenden Kunden) umfasst, sondern auch eine IM-unabhängige Gruppenkommunikation ermöglicht. Daher erfolgt hier zunächst eine allgemeine Beschreibung der KAA-/IM2PAP-Architektur, gefolgt von einer Beschreibung einer möglichen Art und Weise der IM-unabhängigen Gruppenkommunikation.

In der Fig. 1 eine KAA bzw. IM2PAP 10 mit einer eingangsseitigen Schnittstelle 11a und einer ausgangsseitigen Schnittstelle 11b gezeigt, wobei die ausgangsseitige Schnittstelle 11b nicht notwendigerweise genutzt werden muss. Als Eingangskanal dient eine von mehreren weit verbreiteten text-basierten IM-Anwendungen 3.1, 3.n, die auf dem mobilen Endgerät 1.1, 1.n des Absenders A (Kunde) installiert ist. Der Absender startet die Kommunikation durch das Absenden einer Nachricht über die IM-Anwendung (Schritt 1). Die Nachricht ist an eine Telefonnummer oder IM-ID (Identifikationsnummer) adressiert, welche vom Betreiber der IM2PAP (bzw. vom Dienstleister/Unternehmen) registriert und den Absendern öffentlich kommuniziert wurde. Die IM-ID ist technisch mit der IM2PAP verknüpft. Die KAA registriert sich dazu beim jeweiligen IM-Dienst mit einer Telefonnummer, in der Art wie es ebenfalls durch eine Person erfolgen müsste. Nach der Registrierung werden die Zugangsdaten für den IM-Dienst in eine der Konfigurationsdateien der KAA eingetragen, so dass sich die KAA mit dem IM-Dienst verbinden kann.

Die Textnachricht D1 wird vom mobilen Endgerät des Absenders an den vom jeweiligen IM-Anbieter betriebenen IM-Dienst 3 übergeben (Schritt 2). Dieser Vorgang ist ein kommunikativer Standardvorgang.

Die Nachricht wird daraufhin über die Programmierschnittstelle (API) 3a.1, 3a.n des IM-Dienstes an die IM2PAP übergeben oder von dieser aktiv abgerufen (Schritt 3). Ob die Übergabe durch den IM-Dienst erfolgt ("Push") oder durch die IM2PAP initiiert wird ("Pull"), hängt von den Spezifika der API-Programmierschnittstelle ab und kann frei eingestellt bzw. gewählt werden. Üblicherweise wird eine entweder- oder-Auswahl getroffen.

Ein für den jeweiligen IM-Dienst 3 spezifisch ausgebildeter Adapter 11, 11.1, 11.n der IM2PAP 10 transformiert/formatiert die empfangenen Nachrichtendaten D1 aus einem IM-Dienst-spezifischen Format in ein intern von der IM2PAP genutztes Datenstrukturformat (Nachrichtendaten D2), das für die weitere Abarbeitung der Daten innerhalb der IM2PAP verwendet wird (Schritt 4). Das Datenstrukturformat entspricht dabei insbesondere einer Struktur mit einer Ebene, und liegt bevorzugt im JSON-Format vor.

Ein Nachrichtenmodul 13 empfängt die strukturierten/formatierten Nachrichtendaten vom (jeweiligen) Adapter, speichert die Nachrichtendaten sowie die Kontaktdaten (Informationsdaten D5) des Absenders in einer Datenbank 18 der IM2PAP, und reicht die Nachrichtendaten weiter an ein Prozessmodul 15 (Schritt 5). Zwischen dem Prozessmodul 15 und dem Nachrichtenmodul 13 können dabei selektierte Nachrichtendaten D3 ausgetauscht werden.

Das Prozessmodul analysiert den Nachrichteninhalt bzw. die Nachrichtendaten (Schritt 6) und sucht in der Datenbank nach einem passenden Prozess, dem aktuell zu wählenden Prozessschritt sowie einer passenden Antwortnachricht (Schritt 7).

Prozesse bzw. Prozessablaufschemata können von Mitarbeitern 5.s des Unternehmens über eine Webanwendung bzw. GUI bzw. Prozess-Konfigurationsoberfläche 17 konfiguriert werden (Schritt 8) und werden in der Datenbank 18 der Plattform 10 in einer Prozess-Bibliothek gespeichert (Schritt 9).

Enthält die empfangene Nachricht Daten, die an ein anderes Unternehmen/Unternehmenssystem 5, 5.1, 5.n weitergegeben werden sollen, oder werden Daten aus einem anderen Unternehmenssystem für die Antwortnachricht benötigt, werden diese Daten über die ausgangsseitige Schnittstelle 11b bzw. über eine API-Schnittstellenschicht 5a, 5a.1, 5a.n zwischen der IM2PAP und dem jeweils erforderlichen, anderen System ausgetauscht (Schritt 10). Die jeweilige API-Schnittstellenschicht 5a kann dabei auch einen Adapter umfassen, insbesondere in der Art der zuvor beschriebenen Adapter an der eingangsseitigen Schnittstelle 11a.

Kann die empfangene Nachricht nicht automatisiert durch das Prozessmodul 15 beantwortet werden, wird sie oder werden die entsprechenden Teile daraus an eine Chat-Oberfläche 16 einer Webanwendung übergeben, in der ein Mitarbeiter 5.s des Unternehmens die Bearbeitung des Prozesses übernehmen und die Antwortnachricht manuell eingeben kann (Schritt 11). Die entsprechende Selektion aus den Nachrichtendaten kann im Prozessmodul erfolgen.

Sowohl automatisch vom Prozessmodul erzeugte als auch manuell über die Chat-Oberfläche eingegebene Antwortnachrichten bzw. abgearbeitete Nachrichtendaten D4 werden zurück an das Nachrichtenmodul 13 übergeben (Schritt 12), welches diese an den passenden Adapter 11.1, 11.n weiterleitet (Schritt 13). Die Zuordnung zu den Adaptern und damit das Zurücksenden zu dem/den Absendern A kann dabei basierend auf demjenigen Eingangskanal erfolgen, welcher zuvor insbesondere aus Meta-Informationen der jeweiligen Nachrichtendaten ermittelbar ist. Der jeweilige Adapter vollzieht dabei ein Zurücktransformieren der Nachrichtendaten D4. Der Adapter sendet die Antwortnachricht über die entsprechende API an den IM-Dienst zurück (Schritt 14). Dieser sendet die Antwort schließlich an das mobile Endgerät 1.1; 5.1 des Absenders A (Schritt 15), auf dem sie als Textnachricht in der IM-Anwendung angezeigt wird. Dieser letzte Schritt kann dann wieder als ein kommunikativer Standardvorgang angesehen werden, welcher unabhängig von der IM2PAP durch den IM-Dienst ausgeführt wird.

Im Folgenden wird unter Bezugnahme auf Figur 2 die IM-unabhängige Gruppenkommunikation näher beschrieben. Die IM2PAP 10 unterstützt nicht nur die vollautomatische, teilautomatisierte und manuelle Beantwortung von einzelnen Kundenanfragen (Mensch zu Maschine-Kommunikation), sondern ermöglicht auch die Kommunikation mit Kundengruppen sowie die Kommunikation von Kunden untereinander über verschiedene IM-Dienste hinweg (Mensch zu Gruppen-Kommunikation). Die Realisierung von Gruppenkommunikation über verschiedene IM-Dienste hinweg ist ein zentraler Aspekt der vorliegenden Erfindung und wird im Weiteren erläutert.

Im Falle einer Gruppenkommunikation dient die IM2PAP 10 als Mittler zwischen allen oder den gewünschten Mitgliedern/Empfängern einer Gruppe. Jedes Gruppenmitglied sendet Nachrichten an und empfängt Nachrichten von der IM2PAP, welche basierend auf einer Identifikationsnummer als Kontakt im Telefonbuch des jeweils genutzten mobilen Endgerätes gespeichert und darüber adressierbar ist. Die Kontaktdaten können einer Telefonnummer entsprechen. Die anderen Gruppenmitglieder müssen nicht als Kontakte gespeichert sein bzw. können vollkommen unbekannt sein. Die IM2PAP leitet empfangene Nachrichtendaten z.B. an alle anderen Gruppenmitglieder weiter, und verbirgt dabei die Kontaktinformationen des jeweiligen Absenders (wie Telefonnummer oder IM-ID) und offenbart nur den Namen bzw. Benutzernamen des Absenders.

Figur 3 zeigt eine exemplarische Gruppenkommunikation und deren Abbildung auf den einzelnen mobilen Endgeräten der Gruppenmitglieder. In diesem Beispiel ist Absender A1 auf der Suche nach Hilfe; die Kontakt- bzw. Informationsanfrage geht von Absender A1 aus. Die adressierte Gruppe umfasst beispielsweise alle Empfänger aus derselben Stadt; im Beispiel sind dies die Empfänger A2 und An bzw. deren Endgeräte 1.2, 1.n.
(Phase I) Absender A1 sendet eine Nachricht mit seinem Hilfegesuch über die IM-Anwendung 3.1 an die als Kontakt abgespeicherte IM2PAP. Die IM2PAP leitet die empfangenen Nachrichtendaten D1 an die anderen Gruppenmitglieder weiter. Die Empfänger A2, An (Gruppenmitglieder) empfangen jeweils die Nachricht von der IM2PAP in der von ihm genutzten IM-Anwendung 3.n, wobei die IM2PAP ebenfalls als Kontakt im Telefonbuch des mobilen Endgerätes hinterlegt ist. Der Name des Absenders A1 wurde der weitergeleiteten Nachricht vorangestellt, um die Empfänger A2 und An über den Absender A1 zu informieren. In technischer Hinsicht kann die IM2PAP als der Absender der weitergeleiteten Nachricht bzw. der transformierten Nachrichtendaten D4 definiert werden. Die Kontaktdaten (z.B. Telefonnummer oder Instant Messaging-ID) des Absenders A1 werden dabei nicht an die Empfänger A2 und An weitergegeben.
(Phase II) Empfänger An reagiert auf die Nachricht und bietet seine Hilfe an, indem er auf die Nachricht des Absenders A1 antwortet. Die IM2PAP stellt den Namen des Empfängers An der Antwortnachricht voran und sendet diese an A1 und A2.

Der dem ersten Teil des obigen Beispiels (Anfrage von Absender A1) zugrunde liegende technische Datenfluss wird im Folgenden anhand der Figur 2 erläutert.

Absender A1 sendet eine Anfrage über die auf seinem mobilen Gerät installierte IM-Anwendung 3.1. Die Nachricht ist nicht direkt an eine bestimmte Gruppe von Empfängern adressiert, sondern an die für die IM2PAP registrierte Telefonnummer oder IM-ID (Schritt 1). Wie zuvor bezüglich Figur 1 beschrieben, wird die Nachricht an den IM-Dienst 3 übergeben (Schritt 2), von dort an den IM2PAP-Adapter 11.1 für die IM-Anwendung 3.1. überstellt bzw. transmittiert (Schritt 3) und von diesem in das IM2PAP-Format (Datenstrukturformat der IM2PAP) transformiert (Schritt 4).

Das Nachrichtenmodul 13 erkennt die empfangene Nachricht als Gruppennachricht und übergibt sie zur weiteren Bearbeitung an die Unterkomponente Gruppennachrichtenmodul 13.1 (Schritt 5a).

Das Gruppennachrichtenmodul durchsucht die Datenbank 18 nach allen anderen Empfängern, die zur adressierten Gruppe oder zur Gruppe des Absenders gehören (Schritt 6a), in diesem Beispiel die Empfänger A2 und An. Für jeden Empfänger werden der jeweils genutzte IM-Dienst sowie die dazugehörige Telefonnummer oder IM-ID aus der Datenbank ausgelesen.

Das Gruppennachrichtenmodul 13.1 modifiziert die empfangene Nachricht, insbesondere indem es den Namen des Absenders A1 dem Nachrichtentext voranstellt (Schritt 7a). Insbesondere wird der Name des Absenders den Nachrichtendaten hinzugefügt. Dies ermöglicht, dass alle Gruppenmitglieder mit der bzw. über die IM2PAP kommunizieren können und nicht direkt miteinander kommunizieren müssen.

Schließlich übergibt das Gruppennachrichtenmodul die modifizierte Nachricht an den jeweils passenden Adapter für jedes Gruppenmitglied, z.B. an den für die IM-Anwendung 3.n vorgesehenen Adapter 11.n für den Empfänger An (Schritt 13a).

Die Adapter transformieren die modifizierte Nachricht vom IM2PAP-Format in das jeweilige
Format des IM-Dienstes und senden die Nachricht an denjenigen IM-Dienst (Schritt 14), welcher die Nachricht an die gewünschten mobilen Endgeräte der anderen Gruppenmitglieder weiterleitet (Schritt 15). Die Gruppenmitglieder können die modifizierte (abgearbeitete und zurücktransformierte) Nachricht in der jeweiligen auf ihren mobilen Endgeräten installierten IM-Anwendung lesen.

Das Transmittieren von Nachrichten an Gruppen kann nicht nur von Absendern selbst, sondern auch manuell von Mitarbeitern des Unternehmens über die Chat-Oberfläche (Schritt 11) oder automatisiert (z.B. für Datenerhebungs- und/oder Werbezwecke) vom Prozessmodul initiiert werden (Schritt 12).

In den Figuren wird ein Nachrichtenfluss (Transmission von Nachrichtendaten) durch einen Pfeil mit durchgehender Linie gekennzeichnet, und ein Datenfluss durch einen gestrichelten Pfeil, und eine Interaktion durch oder mit einem Servicemitarbeiter durch einen gepunkteten Pfeil.

Ein weiteres Beispiel für einen einfachen Kommunikationsprozess zwischen wenigstens drei Gruppenmitgliedern A1, A2, An wird in Fig. 3 beschrieben. In der Phase bzw. auf der Ebene I. erfolgt eine Emission von Nachrichtendaten von Gruppenmitglied A1. In der Phase bzw. auf der Ebene II. erfolgt eine Antwort von Gruppenmitglied An, bzw. ein Zurücktransmittieren der abgearbeiteten Nachrichtendaten D4. Auf dem jeweiligen mobilen Endgerät 1.1, 1.2, 1.n wird eine IM-Anwendung 3.1, 3.2, 3.n genutzt. Zunächst schreibt Gruppenmitglied A1 an die KAA 10 "Hallo, kann mir jemand helfen?" (D1, Nachricht N1). Daraufhin kommuniziert die KAA an Empfänger A2 und An: " Gruppenmitglied A1: Hallo, kann mir jemand helfen?" (D2, D4, automatisierte Nachricht N1.1). Der Name ist dabei vorangestellt. Daraufhin schreibt Gruppenmitglieder An an die KAA: "Ja, ich kann helfen." (D1, Nachricht N2). Die KAA kommuniziert dann an die Empfänger A1 und A2: "Gruppenmitglied An: Ja, ich kann helfen." (D2, D4, automatisierte Nachricht N2.1). Die automatisierten Schritte in Reaktion auf eingehende Nachrichten N1, N2 können dabei in Echtzeit erfolgen.

### Bezugszeichenliste

- 1.1, 1.n: mobiles Endgerät 1 bzw. n
- 3: Instant Messaging-Dienst
- 3.1, 3.n: Instant Messaging-Anwendung 1 bzw. n
- 3a.1, 3a.n: Instant Messaging-API (IM-API) 1 bzw. n
- 5, 5.1, 5.n: Empfänger bzw. Empfängergruppe, insbesondere Empfänger-Person oder mobiles Endgerät oder Unternehmens(kommunikations-)system 1 bzw. n
- 5.s: Empfänger, insbesondere Servicemitarbeiter/Kommunikationsmitarbeiter
- 5a, 5a.1, 5a.n: Unternehmenssystem-API bzw. Adapter dafür

- 10: Kommunikationsautomatisierungsanordnung (KAA)
- 11, 11.1, 11.n: Adapter 1 bzw. n
- 11a: eingangsseitige Schnittstelle zur jeweiligen IM-API
- 11b: ausgangsseitige Schnittstelle zum jeweiligen Unternehmenssystem bzw. zur Unternehmenssystem-API
- 13: Nachrichtenmodul
- 13.1: Gruppennachrichtenmodul
- 15: Prozessmodul
- 16: Kommunikationsschnittstelle, insbesondere grafische Benutzerschnittstelle, z.B. Chat-Oberfläche
- 17: grafische Benutzerschnittstelle, insbesondere Prozesskonfigurations-Oberfläche
- 18: Datenbank

- Phase I: Emission/Absenden von Nachrichtendaten, insbesondere durch eine erstes Gruppenmitglied
- Phase II: Zurücktransmission von Nachrichtendaten, insbesondere durch weitere Gruppenmitglieder

- A, A1, A2, An: Absender/Emittent von Nachrichtendaten
- D1, N1, N2: Nachrichtendaten, insbesondere eingehende Anfrage
- D2: transformierte, also strukturierte und/oder formatierte Nachrichtendaten
- D3: selektierte Nachrichtendaten
- D4, N1.1, N2.1: abgearbeitete Nachrichtendaten, insbesondere übermittelt an Empfänger
- D5: Informationsdaten
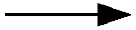 Nachrichtenfluss
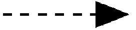 Datenfluss
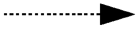 Benutzerinteraktion bzw. Interaktion durch Servicemitarbeiter

## Patentansprüche

1. Kommunikationsautomatisierungsanordnung (10) eingerichtet zur automatisierten bilateralen Transmission von Nachrichtendaten (D1), insbesondere Textnachrichten, zwischen wenigstens einem mobilen Endgerät (1.1) eines Absenders (A, A1) einerseits und dem Absender selbst oder wenigstens einem Empfänger (A2, An, 5, 5.1, 5.s) oder wenigstens einer Gruppe von Empfängern andererseits, wobei die Kommunikationsautomatisierungsanordnung eingerichtet ist zur zumindest teilweise automatisierten internen Abarbeitung der Nachrichtendaten;
**dadurch gekennzeichnet,dass** die Kommunikationsautomatisierungsanordnung eingerichtet ist zur bilateralen Transmission der Nachrichtendaten über eine Mehrzahl von Instant Messaging-APIs (3a.1, 3a.n) von vom jeweiligen mobilen Endgerät genutzten Instant Messaging-Anwendungen, wobei die Kommunikationsautomatisierungsanordnung an einer eingangsseitigen Schnittstelle (11a) zur jeweiligen Instant Messaging-API wenigstens einen an die jeweilige Instant Messaging-API koppelbaren Adapter (11.1) eingerichtet zum Strukturieren und wahlweise auch Formatieren eingehender Nachrichtendaten auf ein internes Datenstrukturformat für die Abarbeitung in der Kommunikationsautomatisierungsanordnung aufweist.

2. Kommunikationsautomatisierungsanordnung nach Anspruch 1, wobei die eingangsseitige Schnittstelle (11a) einen Webservice umfasst; oder wobei die eingangsseitige Schnittstelle eine eingangsseitig mehrkanalige Verteiler-Schnittstelle mit einheitlichem Datenstrukturformat-Kanal seitens der Kommunikationsautomatisierungsanordnung ist; oder wobei der wenigstens eine Adapter (11.1) eingerichtet ist zur bilateralen Transmission von und zur jeweiligen Instant Messaging-API (3a.1).

3. Kommunikationsautomatisierungsanordnung nach einem der vorhergehenden Ansprüche, umfassend ein an einen/den wenigstens einen Adapter (11.1) gekoppeltes, im Datenstrukturformat kommunizierendes Nachrichtenmodul (13) eingerichtet zur bilateralen Übergabe transmittierter strukturierter/formatierter Nachrichtendaten (D2) von/zu wenigstens einem weiterem internen Modul (15) der Kommunikationsautomatisierungsanordnung oder von/zu wenigstens einer grafischen Benutzerschnittstelle (16) in der Kommunikationsautomatisierungsanordnung oder von/zu wenigstens einer Datenbank (18) der Kommunikationsautomatisierungsanordnung.

4. Kommunikationsautomatisierungsanordnung nach dem vorhergehenden Anspruch, wobei die Kommunikationsautomatisierungsanordnung, insbesondere das Nachrichtenmodul (13) ein mit einer/der Datenbank (18) der Kommunikationsautomatisierungsanordnung gekoppeltes Gruppennachrichtenmodul (13.1) eingerichtet zur Selektion und Zuweisung strukturierter/formatierter Nachrichtendaten zu wenigstens einer Gruppe einer Mehrzahl von Empfängern aufweist; oder wobei die Kommunikationsautomatisierungsanordnung eine an ein/das Nachrichtenmodul (13) oder an ein/das Gruppennachrichtenmodul gekoppelte Datenbank (18) mit darin abgelegten Informationsdaten (D5) des Absender und/oder der Empfänger umfasst, insbesondere Kontaktdaten und wenigstens eine Gruppenzugehörigkeit.

5. Kommunikationsautomatisierungsanordnung nach dem vorhergehenden Anspruch, wobei die Kommunikationsautomatisierungsanordnung, insbesondere das Nachrichtenmodul (13) ein Gruppennachrichtenmodul (13.1) umfasst, welches in Verbindung mit wenigstens einer Datenbank (18) der Kommunikationsautomatisierungsanordnung steht und/oder ausgangsseitig in Verbindung mit wenigstens einer Empfänger-API steht, insbesondere über eine ausgangsseitige Schnittstelle.

6. Kommunikationsautomatisierungsanordnung nach einem der vorhergehenden Ansprüche, umfassend ein an ein/das Nachrichtenmodul gekoppeltes Prozessmodul (15) eingerichtet zur Analyse und Zuordnung der strukturierten/formatierten Nachrichtendaten (D2) zu wenigstens einem insbesondere im/in einem Prozessmodul (15) hinterlegten Kommunikationsprozess und zur automatisierten Abarbeitung der Nachrichtendaten basierend auf einem selektierten Kommunikationsprozess und zum Zurückliefern abgearbeiteter Nachrichtendaten zum Nachrichtenmodul (13); oder wobei das Prozessmodul (15) eine Prozess-Bibliothek mit die Art und Weise der zumindest teilweise automatisierten Abarbeitung vorgebenden Prozessablaufschemata umfasst, jeweils spezifisch in Abhängigkeit der Art der Nachrichtendaten, wobei das Prozessmodul oder an eine in der Datenbank hinterlegte Prozess-Bibliothek gekoppelt ist.

7. Kommunikationsautomatisierungsanordnung nach einem der vorhergehenden Ansprüche, umfassend eine ausgangsseitige Schnittstelle (11b) zu einer Empfänger-API eines externen Unternehmenssystems (5.1), insbesondere bereitgestellt durch wenigstens einen an eine API des Unternehmenssystems koppelbaren Adapter (5a).

8. Computerprogrammprodukt eingerichtet zum Abarbeiten von Nachrichtendaten (D1) in einem zumindest teilweise automatisierten bilateralen Kommunikationsprozess zwischen wenigstens einem mobilen Endgerät (1.1) eines Absenders (A, A1) der Nachrichtendaten einerseits und dem Absender selbst oder wenigstens einem Empfänger (A2, An, 5, 5.1, 5.s) andererseits, wobei das Computerprogrammprodukt eingerichtet ist zur bilateralen Kommunikation zwischen wenigstens einer Instant Messaging-API (3a.1) einer vom Absender genutzten Instant Messaging-Anwendung (3.1) und dem Empfänger und/oder zwischen dem Absender und einer als Plattform für das Computerprogrammprodukt genutzten Kommunikationsautomatisierungsanordnung (10) basierend auf einem internen Datenstrukturformat, insbesondere jeweils in einer Kommunikationsautomatisierungsanordnung nach einem der vorhergehenden Ansprüche; oder eingerichtet zum Abarbeiten von Nachrichtendaten (D1) in einem zumindest teilweise automatisierten bilateralen Kommunikationsprozess zwischen einer Mehrzahl von Instant Messaging-APIs von jeweils durch ein mobiles Endgerät eines Absenders der Nachrichtendaten genutzten Instant Messaging-Anwendungen einerseits und wenigstens einem Empfänger (5.1, 5.s) andererseits, wobei das Computerprogrammprodukt eine grafische Benutzerschnittstelle (16) eingerichtet für manuelle Abarbeitung von auf ein internes Datenstrukturformat strukturierter/formatierten Nachrichtendaten (D2) umfasst, insbesondere eine in eine Kommunikationsautomatisierungsanordnung nach einem der vorhergehenden Ansprüche integrierte grafische Benutzerschnittstelle.

9. Verfahren zum automatisierten bilateralen Transmittieren und zum zumindest teilweise automatisierten Abarbeiten von Nachrichtendaten (D1) in einem zumindest teilweise automatisierten bilateralen Kommunikationsprozess zwischen wenigstens einem mobilen Endgerät (1.1) eines Absenders (A, A1) einerseits und dem Absender selbst oder wenigstens einem Empfänger (A2, An, 5, 5.1, 5.s) oder wenigstens einer Gruppe von Empfängern andererseits, insbesondere in einer Kommunikationsautomatisierungsanordnung (10) nach einem der vorhergehenden Ansprüche;
**dadurch gekennzeichnet, dass** das bilaterale Transmittieren der Nachrichtendaten (D1) über wenigstens eine von einer Mehrzahl von Instant Messaging-APIs (3a.1, 3a.n) von vom jeweiligen mobilen Endgerät genutzten Instant Messaging-Anwendungen erfolgt, wobei an einer eingangsseitigen Schnittstelle (11a) zur jeweiligen Instant Messaging-API ein Strukturieren und wahlweise auch Formatieren eingehender Nachrichtendaten auf ein internes Datenstrukturformat der Kommunikationsautomatisierungsanordnung erfolgt und das zumindest teilweise automatisierte interne Abarbeiten strukturierter/formatierter Nachrichtendaten (D2) im internen Datenstrukturformat erfolgt.

10. Verfahren nach dem vorhergehenden Verfahrensanspruch, wobei die strukturierten/formatierten Nachrichtendaten (D2) zu einer Mehrzahl von Empfängern oder zu wenigstens einer Gruppe einer Mehrzahl von Empfängern transmittiert werden.

11. Verfahren nach einem der vorhergehenden Verfahrensansprüche, wobei das Abarbeiten strukturierter/formatierter Nachrichtendaten (D2) jeweils spezifisch basierend auf einem in Abhängigkeit der Art der Nachrichtendaten (D2, D3) selektierten Kommunikationsprozess erfolgt, insbesondere mittels eines separat von einem Nachrichtenmodul (13) der Kommunikationsautomatisierungsanordnung adressierbaren/kontaktierbaren Prozessmoduls der Kommunikationsautomatisierungsanordnung (10) jeweils in Bezug auf einzelne Schritte einer Sequenz von bilateralen Transmissionen.

12. Verfahren nach einem der vorhergehenden Verfahrensansprüche, wobei das Transmittieren zwischen dem einen Absender und dem einen Empfänger erfolgt, wobei beim Abarbeiten der Nachrichtendaten auf die Datenbank zugegriffen wird und den Nachrichtendaten Informationsdaten beigefügt werden, insbesondere mittels eines/des Nachrichtenmoduls; oder wobei das Transmittieren zwischen dem einen Absender und einer Empfänger-Gruppe erfolgt, wobei beim Abarbeiten der Nachrichtendaten über eine ausgangsseitige Schnittstelle über wenigstens einen Adapter und über eine Empfänger-API ein Unternehmenssystem kontaktiert wird, insbesondere mittels des Prozessmoduls.

13. Verfahren nach einem der vorhergehenden Verfahrensansprüche, wobei das Transmittieren und Abarbeiten in der folgenden Reihenfolge erfolgt: Empfangen der Nachrichtendaten vom Absender über die Instant Messaging-API über den entsprechenden Adapter, Abarbeitung der Nachrichtendaten im Nachrichtenmodul, Abarbeiten der Nachrichtendaten im Prozessmodul, Transmittieren der Nachrichtendaten über das Nachrichtenmodul und den Adapter zurück, insbesondere in mehreren Iterationen wiederholt bilateral als reine Mensch zu Maschine-Kommunikation zwischen dem einen Absender und dessen Empfänger-Endgerät und der Kommunikationsautomatisierungsanordnung; oder in der folgenden Reihenfolge: Empfangen der Nachrichtendaten vom Absender über die Instant Messaging-API über den entsprechenden Adapter, Abarbeitung der Nachrichtendaten im Nachrichtenmodul, Selektion und Zuweisung der Nachrichtendaten zu wenigstens einer Gruppe im Gruppennachrichtenmodul und Transmittieren der Nachrichtendaten zur Gruppe, Transmittieren von Nachrichtendaten über das Gruppennachrichtenmodul und den Adapter zurück, insbesondere in mehreren Iterationen wiederholt bilateral als Mensch zu Gruppen-Kommunikation zwischen dem Absender und wenigstens einer Empfänger-Gruppe.

14. Verwendung eines Computerprogrammproduktes oder einer Kommunikationsautomatisierungsanordnung (10) zum Abarbeiten von Nachrichtendaten (D1) in einem zumindest teilweise automatisierten Kommunikationsprozess zwischen wenigstens einem mobilen Endgerät (1.1) eines Absenders der Nachrichtendaten einerseits und wenigstens einem Empfänger (5.1, 5.s) andererseits, wobei mittels des Computerprogrammproduktes ein bilaterales Transmittieren der Nachrichtendaten über wenigstens eine von einer Mehrzahl von Instant Messaging-APIs (3a.1, 3a.n) von vom jeweiligen mobilen Endgerät des Absenders genutzten Instant Messaging-Anwendungen erfolgt, und wobei mittels des Computerprogrammproduktes ein Strukturieren und wahlweise auch Formatieren eingehender Nachrichtendaten auf ein internes Datenstrukturformat erfolgt und ein zumindest teilweise automatisiertes internes Abarbeiten der strukturierten/formatierten Nachrichtendaten (D2) im internen Datenstrukturformat erfolgt, bevor die abgearbeiteten Nachrichtendaten wieder zurücktransformiert und dem Empfänger oder Absender über die Instant Messaging-API bereitgestellt werden, insbesondere Verwendung eines Computerprogrammproduktes in einer Kommunikationsautomatisierungsanordnung (10) nach einem der vorhergehenden Ansprüche für bilaterale Kommunikation mit einer Empfänger-Gruppe; oder Verwendung eines Computerprogrammproduktes oder einer Kommunikationsautomatisierungsanordnung (10) zum automatisierten Abarbeiten von Nachrichtendaten in einem zumindest teilweise automatisierten Kommunikationsprozess zwischen wenigstens einem mobilen Endgerät (1.1) eines Absenders der Nachrichtendaten einerseits und wenigstens einem Empfänger (5.1, 5.s) andererseits, wobei mittels des Computerprogrammproduktes oder der Kommunikationsautomatisierungsanordnung wenigstens eine Instant Messaging-API (3a.1) für bilaterale Kommunikation zwischen Absender und Empfänger und/oder zwischen Absender und Kommunikationsautomatisierungsanordnung genutzt wird.

15. Verwendung wenigstens eines Adapters (11.1) zum Transmittieren und Strukturieren und wahlweise auch Formatieren von Nachrichtendaten (D1) in einem zumindest teilweise automatisierten Kommunikationsprozess zwischen wenigstens einem mobilen Endgerät (1.1) eines Absenders der Nachrichtendaten einerseits und wenigstens einer vorselektierten Gruppe von Empfängern (5.1, 5.s) andererseits, wobei die Nachrichtendaten von einer Mehrzahl von Instant Messaging-APIs (3a.1) übernommen, auf ein einheitliches internes Datenstrukturformat strukturiert/formatiert und nach zumindest teilweise automatisierter Abarbeitung individuell zurücktransformiert wieder an der jeweiligen Instant Messaging-API bereitgestellt werden, insbesondere Verwendung einer Mehrzahl von Adaptern für ein Computerprogrammprodukt oder in einer Kommunikationsautomatisierungsanordnung (10) nach einem der vorhergehenden Ansprüche für bilaterale Kommunikation mit einer Empfänger-Gruppe.
